# EUROPÄISCHE PATENTSCHRIFT

(11) **EP 2 182 025 B1**
(45) Veröffentlichungstag und Bekanntmachung des Hinweises auf die Patenterteilung: **06.10.2010**
(21) Anmeldenummer: 08168009.2
(22) Anmeldetag: 31.10.2008
(51) Int. Cl.: C08K 3/00, C08L 63/00, C09D 163/00

(54) **Hitzehärtende Epoxidharzzusammensetzungen einsetzbar als Rohbauklebstoff oder Strukturschaum**
Heat curable epoxide resin compositions suitable as bodyshop adhesive or structural foam
Composition de résine époxy durcissant à la chaleur appropriée comme adhésive de carrosserie

(43) Veröffentlichungstag der Anmeldung: 05.05.2010
(73) Patentinhaber: Sika Technology AG, 6340 Baar (CH)
(72) Erfinder: Finter, Jürgen, 8037, Zürich (CH); Jendoubi, Elyes, 8050, Zürich (CH)
(74) Vertreter: Sika Patent Attorneys

(56) Entgegenhaltungen:
- EP-A- 1 715 003
- EP-A- 1 876 194
- WO-A-2004/065485
- US-B1- 6 387 470

## Beschreibung

### Technisches Gebiet

Die vorliegende Erfindung betrifft das Gebiet der hitzehärtenden Epoxidharzzusammensetzungen, insbesondere deren Verwendung als Rohbauklebstoffe, Strukturverstärkungen und Strukturschäumen.

### Stand der Technik

Hitzehärtende Epoxidharzklebstoffen werden schon länger als Klebstoffe im Rohbau sowie in Verstärkungselementen bzw. Strukturschäumen eingesetzt.

Bekannte hitzehärtende Epoxidharzklebstoffe, insbesondere von schlagzähen Epoxidharzklebstoffen sind bei Raumtemperatur typischerweise flüssig oder zumindest pastös. Dies ist nachteilig, wenn die Zusammensetzung appliziert wurde und bis zur Aushärtung formstabil gelagert werden sollten. Neben dem Effekt, dass sich nämlich beim Lagern im unausgehärteten Zustand die Form ändert, besteht der Nachteil dass derartige Formkörper auch sehr Staubanfällig sind, was wiederum Nachteile im Handling und der Haftung derartiger Formkörper mit sich bringt. Es besteht deshalb ein grosser Wunsch nach hitzehärtenden Epoxidharzzusammensetzung mit festem Aggregatszustand, welche bei Raumtemperatur eine klebfreie Oberfläche aufweisen.

Verstärkungselemente, welche eine hitzehärtende Epoxidharzzusammensetzung aufweist und unter Hitzeeinwirkung zu einem Strukturschaum führen sind bekannt beispielsweise unter dem Handelsnamen SikaReinforcer®. US 6,387,470 B1 offenbart beispielsweise eine hitzehärtende und schäumbare Dichtmasse, welche eine Mischung von Epoxid-Flüssigharz und Epoxid-Flüssigharz in Gegenwart von 5 -20 Gew.-% eines Thermoplasten wie Polystyrol und 30 - 45 Gew.-% eines thermoplastischen Elastomers wie SBS-Blockcopolymers. Die Mechanik, insbesondere die Glasübergangstemperatur, und Hafteigenschaften von derartigen Zusammensetzungen werden jedoch aufgrund des hohen Anteils an SBS-Blockcopolymer stark verschlechtert.

### Darstellung der Erfindung

Eine der Aufgaben der vorliegenden Erfindung ist es daher, eine hitzehärtende Epoxidharzzusammensetzung zur Verfügung zu stellen, welche bei Raumtemperatur im ausgehärteten Zustand einerseits fest ist und andererseits eine klebfreie Oberfläche ausbildet, und zudem schlagzäh ist und hohe Glasübergangstemperaturen, insbesondere von über 110°C, aufweisen.

Es hat sich überraschenderweise gezeigt, dass diese Aufgabe durch die hitzehärtende Epoxidharzzusammensetzung gemäss Anspruch 1 gelöst werden kann. Diese Zusammensetzung härtet bei Erhitzen auf eine Temperatur, welche über der Aktivierungstemperatur des Härters liegt, aus.

Die hitzehärtende Epoxidharzzusammensetzung bildet beim Aushärten separate Phasen aus. Die kontinuierliche Phase wird hierbei durch die Epoxidharze gebildet. Dies ist wesentlich für das Erzielen der vorteilhaften Eigenschaften.

Falls diese Zusammensetzungen ein Treibmittel aufweisen, eignen sich diese hitzehärtenden Zusammensetzungen für das Erzeugen von Schäumen. Diese Schäume sind bestens geeignet Strukturen zu verstärken.

Die Zusammensetzungen lassen sich aufschmelzen und bei erhöhter Temperatur, jedoch unterhalb der Aktivierungstemperatur des Härters, einfach umformen. Aufgrund der Besonderheit, dass die hitzehärtenden Epoxidharzzusammensetzungen bei Raumtemperatur fest sind und über eine klebfreie Oberfläche verfügen, eignen sie sich bestens für die Herstellung von Verstärkungselementen. Derartige Verstärkungselemente sind bei Raumtemperatur formstabil und einfach lagerbar.

Weitere Aspekte der vorliegenden Erfindung sind Gegenstand weiterer unabhängiger Ansprüche. Besonders bevorzugte Ausführungsformen sind Gegenstand der abhängigen Ansprüche.

### Wege zur Ausführung der Erfindung

Die vorliegende Erfindung betrifft in einem ersten Aspekt eine hitzehärtende Epoxidharzzusammensetzung. Diese hitzehärtende Epoxidharzzusammensetzung enthält
- mindestens ein Epoxid-Flüssigharz **A1** mit durchschnittlich mehr als einer Epoxidgruppe pro Molekül;
- mindestens ein Epoxid-Festharz **A2** mit durchschnittlich mehr als einer Epoxidgruppe pro Molekül;
- mindestens ein bei Raumtemperatur festes Homopolymer **HP** eines olefinisch ungesättigten Monomers **M;**
- mindestens einen polymeren Schlagzähigkeitsmodifikator **D;** sowie
- mindestens einen Härter **B** für Epoxidharze, welcher durch erhöhte Temperatur aktiviert wird.

Es gilt hierbei die Massgabe, dass der Gewichtsanteil des Schlagzähigkeitsmodifikators **D** an der Epoxidharzzusammensetzung kleiner als 20 Gew.-% ist, und dass die Gewichtsmenge des Raumtemperatur festen Homopolymers **HP** grösser als die Gewichtsmenge des Schlagzähigkeitsmodifikators **D** ist.

Bei "Raumtemperatur feste" organische Substanzen weisen im Rahmen dieser Erfindung eine Glasübergangstemperatur auf, welche über der Raumtemperatur liegt. Die Glasübergangstemperatur wird hierbei mittels DSC bestimmt.

Als "Raumtemperatur" wird in diesem Dokument eine Temperatur von 25°C verstanden.

In diesem Dokument ist die Verwendung des Terms "unabhängig voneinander" in Zusammenhang mit Substituenten, Reste oder Gruppen dahin gehend auszulegen, dass in demselben Molekül die gleich bezeichneten Substituenten, Resten oder Gruppen gleichzeitig mit unterschiedlicher Bedeutung auftreten können.

In der gesamten hier vorliegenden Schrift werden mit der Vorsilbe "Poly" wie beispielsweise in "Polyisocyanat", "Polyamin", "Polyol", "Polyphenol" und "Polymercaptan" Moleküle bezeichnet, die formal zwei oder mehr der jeweiligen funktionellen Gruppen enthalten.

Unter einem "Schlagzähigkeitsmodifikator" wird in diesem Dokument ein Zusatz eines organischen Polymers zu einer Epoxidharzmatrix verstanden, der bereits bei geringen Zuschlägen, d.h. von typischerweise zwischen 0.1 und 20 Gew.-%, eine deutliche Zunahme der Zähigkeit bewirkt und somit in der Lage ist, höhere Schlag- oder Stossbeanspruchung aufzunehmen, bevor die Matrix einreisst oder bricht.

Die gestrichelten Linien in den Formeln dieses Dokumentes stellen jeweils die Bindung zwischen dem jeweiligen Substituenten und dem dazugehörigen Molekülrest dar.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch sogenannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem sogenannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Als "Fahrzeug" oder "Transportmittel" gelten für dieses Dokument jegliche Fortbewegungsmittel zu Wasser, zu Land und in der Luft. Insbesondere sind dies Schiffe, Radfahrzeuge wie Automobile, Busse, Cars, Lastkraftwagen sowie Schienenfahrzeuge wie Trams und Bahnen.

Bevorzugte Epoxid-Flüssigharze **A1** mit durchschnittlich mehr als einer Epoxidgruppe pro Molekül weisen die Formel (V1) auf

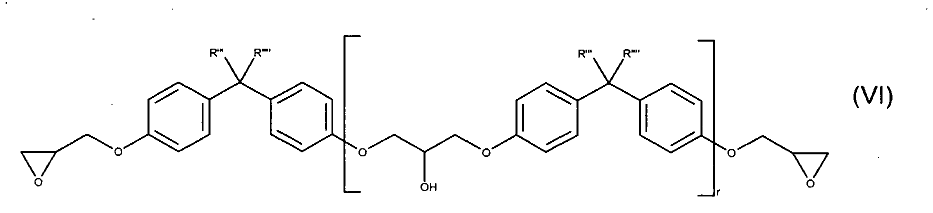

Hierbei stehen die Substituenten R'" und R"" unabhängig voneinander entweder für H oder CH₃. Weiterhin steht der Index r für einen Wert von 0 bis 1. Bevorzugt steht r für einen Wert von kleiner als 0.2.

Es handelt sich somit vorzugsweise um Diglycidylether von Bisphenol-A (DGEBA), von Bisphenol-F sowie von Bisphenol-A/F. Solche Flüssigharze sind beispielsweise als Araldite® GY 250, Araldite® PY 304, Araldite® GY 282 (Huntsman) oder D.E.R.™ 331 oder D.E.R.™ 330 (Dow) oder Epikote 828 (Hexion) erhältlich.

Weiterhin geeignet als Epoxid-Flüssigharze **A1** sind sogenannte Novolake. Diese weisen insbesondere die folgende Formel auf: 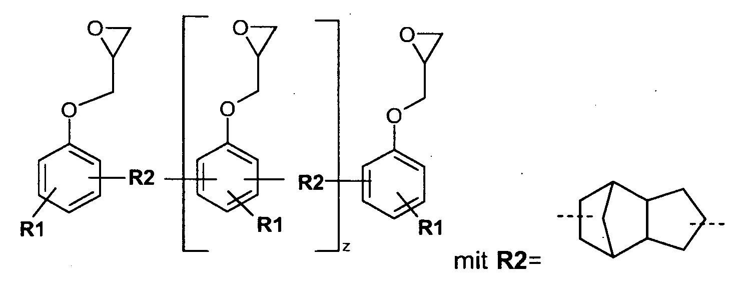 oder CH₂, **R1** = H oder Methyl und z = 0 bis 7.

Insbesondere handelt es sich hierbei um Phenol- oder Kresol-Novolake (**R2** = CH₂).

Solche Epoxidharze sind unter dem Handelsnamen EPN oder ECN sowie Tactix®556 von Huntsman oder unter der Produktereihe D.E.N.™ von Dow Chemical kommerziell erhältlich.

Der Anteil an Epoxid-Flüssigharzen **A1** beträgt vorzugsweise 5 - 85 Gewichts-%, insbesondere 10 - 70 Gewichts-%, bevorzugt 15 - 60 Gewichts-%, am Gewicht der hitzehärtenden Epoxidharzzusammensetzung.

Im Gegensatz zu den Epoxid-Flüssigharzen **A1** sind Epoxid-Festharz **A2** mit durchschnittlich mehr als einer Epoxidgruppe pro Molekül bei Raumtemperatur fest. Die Glasübergangstemperatur von Festharzen liegt über Raumtemperatur, d.h. sie lassen sich bei Raumtemperatur zu schüttfähigen Pulvern zerkleinern.

Bevorzugte Epoxid-Festharze weisen die Formel (V) auf

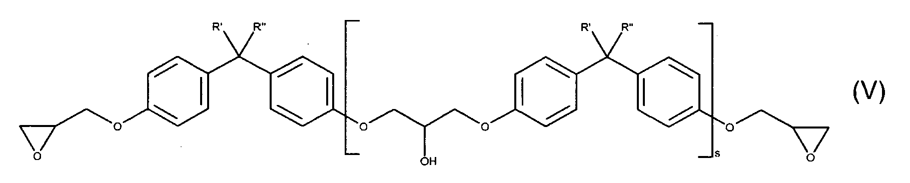

Hierbei stehen die Substituenten R' und R" unabhängig voneinander entweder für H oder CH₃. Weiterhin steht der Index s für einen Wert von > 1.5, insbesondere von 2 bis 12.

Derartige Epoxid-Festharze sind kommerziell erhältlich beispielsweise von Dow oder Huntsman oder Hexion.

Verbindungen der Formel (V) mit einem Index s zwischen 1 und 1.5 werden vom Fachmann als Semisolid-Epoxidharze bezeichnet. Für die hier vorliegende Erfindung werden sie ebenfalls als Festharze betrachtet. Bevorzugt sind jedoch Epoxid-Festharze im engeren Sinn, d.h. wo der Index s in Formel (V) einen Wert von > 1.5 aufweist.

Der Anteil an Epoxid-Festharz **A2** beträgt vorzugsweise 10 - 85 Gewichts-%, insbesondere 15 - 70 Gewichts-%, bevorzugt 15 - 60 Gewichts-%, am Gewicht der hitzehärtenden Epoxidharzzusammensetzung.

Die hitzehärtende Epoxidharzzusammensetzung weist sowohl Epoxid-Flüssigharz **A1** als auch Epoxid-Festharz **A2** auf. Das Gewichtsverhältnis von Epoxid-Festharz **A2** zu Epoxid-Flüssigharz **A1** beträgt vorzugsweise einen Wert von 0.2 bis 5, bevorzugt 1 bis 2.5.

Weiterhin enthält die hitzehärtende Epoxidharzzusammensetzung mindestens einen polymeren Schlagzähigkeitsmodifikator **D.**

Die Schlagzähigkeitsmodifikatoren **D** können fest oder flüssig sein.

Es hat sich gezeigt, dass der polymere Schlagzähigkeitsmodifikator **D** vorteilhaft ausgewählt ist aus der Gruppe bestehend aus blockierten Polyurethanpolymeren, Flüssigkautschuken, Epoxidharz-modifizierten Flüssigkautschuken, Blockcopolymeren und Core-Shell-Polymeren, insbesondere in einer Menge zwischen 0.1 und 20 Gewichts-%, insbesondere von 0.5 - 15 Gewichts-%, bevorzugt von 1 - 10 Gewichts-%, bezogen auf das Gewicht der hitzehärtenden Epoxidharzzusammensetzung.

In einer Ausführungsform ist dieser polymere Schlagzähigkeitsmodifikator **D** ein funktionalisiertes Acrylnitril/Butadien-Copolymer **D1.** Insbesondere ist es einerseits ein carboxyl- oder epoxidterminiertes Acrylnitril/Butadien-Copolymer. Derartige Acrylnitril/Butadien-Copolymer sind beispielsweise unter dem unter dem Namen Hypro™(früher Hycar®) CTBN und CTBNX und ETBN von Nanoresins AG, Deutschland, bzw. Emerald Performance Materials LLC) kommerziell erhältlich. Anderseits kann das Acrylnitril/Butadien-Copolymer **D1** auch ein mit Polyepoxiden oder Polyphenol umgesetztes oder vorverlängertes carboxyl- oder epoxidterminiertes Acrylnitril/Butadien-Copolymer darstellen. Besonders bevorzugt sind dies sogenannte Epoxidharz modifizierte Acrylnitril/Butadien-Copolymere. Besonders geeignet als modifizierte Acrylnitril/Butadien-Copolymere sind solche Flüssigkautschuke, wie sie unter der Produktelinie Polydis®, vorzugsweise aus der Produktelinie Polydis® 36.., von der Firma Struktol® (Schill+Seilacher Gruppe, Deutschland) oder unter der Produktelinie Albipox (Nanoresins, Deutschland) kommerziell vertrieben werden. Funktionalisierte Acrylnitril/Butadien-Copolymere **D1** sind typischerweise flüssig und werden auch als Flüssigkautschuke bezeichnet.

In einer weiteren Ausführungsform ist der polymere Schlagzähigkeitsmodifikator **D** ein Polyacrylatflüssigkautschuk **D2**, der mit flüssigen Epoxidharzen vollständig mischbar ist und sich erst beim Aushärten der Epoxidharzmatrix zu Mikrotröpfchen entmischt. Derartige Polyacrylatflüssigkautschuke sind beispielsweise unter der Bezeichnung 20208-XPA von Rohm und Haas erhältlich.

In einer weiteren Ausführungsform ist der polymere Schlagzähigkeitsmodifikator **D** ein bei Raumtemperatur festes Blockcopolymer **CP.**

Das Blockcopolymer **CP** wird erhalten aus einer anionischen oder kontrollierten radikalischen Polymerisation von (Meth)acrylsäureester mit mindestens einem weiteren olefinisch ungesättigten Monomer.

Als derartige olefinisch ungesättigten Monomere sind insbesondere solche bevorzugt, bei denen die Doppelbindung unmittelbar mit einem Heteroatom oder mit mindestens einer weiteren Doppelbindung konjugiert ist. Insbesondere sind Monomere geeignet, welche ausgewählt sind aus der Gruppe umfassend Styrol, Butadien, Acrylnitril und Vinylacetat. Bevorzugt sind Acrylat/Styrol/Acrylnitril (ASA) Copolymere, erhältlich z.B. unter dem Namen GELOY 1020 von GE Plastics.

Besonders bevorzugte Blockcopolymere **CP** sind Blockcopolymere aus (Meth)acrylsäuremethylester, Styrol und Butadien. Derartige bevorzugte Blockcopolymere sind beispielsweise als Triblockcopolymere unter der Gruppenbezeichnung SBM bei Arkema erhältlich.

In einer weiteren Ausführungsform ist der polymere Schlagzähigkeitsmodifikator **D** ein amphiphiles Blockcopolymer.

Als amphiphiles Blockcopolymer wird im vorliegenden Dokument ein Copolymer verstanden, welches mindestens ein Blocksegment, welches mit Epoxidharz mischbar ist, und mindestens ein Blocksegment, welches mit Epoxidharz nicht mischbar ist, enthält. Insbesondere sind amphiphile Blockcopolymere solche, wie sie offenbart werden in WO 2006/052725 A1, WO 2006/052726 A1, WO 2006/052727 A1, WO 2006/052728 A1, WO 2006/052729 A1, WO 2006/052730 A1, WO 2005/097893 A1, deren Inhalt hiermit durch Bezugnahme eingeschlossen wird.

Beispiele für in Epoxidharz mischbare Blocksegmente sind besonders Polyethylenoxid-, Polypropylenoxid-, Poly(ethylenoxid-co-propylenoxid)- und Poly(ethylenoxid-ran-propylenoxid)-Blöcke sowie deren Mischungen.

Beispiele für in Epoxidharz nicht mischbare Blocksegmente sind einerseits insbesondere Polyether-Blöcke hergestellt aus Alkylenoxiden, welche mindestens 4 C-Atome aufweisen, bevorzugt Butylenoxid, Hexylenoxid und/oder Dodecylenoxid. Insbesondere als derartige Polyether-Blöcke bevorzugt sind Polybutylenoxid-, Polyhexylenoxid- und Poly Dodecylenoxid-Blöcke sowie deren Mischungen.

Beispiele für in Epoxidharz nicht mischbare Blocksegmente sind andererseits Polyethylen-, Polyethylenpropylen-, Polybutadien-, Polyisopren-, Polydimethylsiloxan- und Polyalkylmethacrylat-Blöcke sowie deren Mischungen.

In einer bevorzugten Ausführungsform ist das amphiphile Blockcopolymer ein Blockcopolymer aus Ethylenoxid und/oder Propylenoxid sowie mindestens einem weiteren Alkylenoxid mit mindestens 4 C-Atomen, bevorzugt aus der Gruppe bestehend aus Butylenoxid, Hexylenoxid und Dodecylenoxid.

In einer weiteren, bevorzugten, Ausführungsform ist das amphiphile Blockcopolymer ausgewählt aus der Gruppe bestehend aus Poly(isoprenblock-ethylenoxid)-Blockcopolymere (PI-b-PEO), Poly(ethylenpropylen-b-ethylenoxid)-Blockcopolymere (PEP-b-PEO), Poly(butadien-b-ethylenoxid)-Blockcopolymere (PB-b-PEO), Poly(isopren-b-ethylenoxid-b-isopren)-Blockcopolymere (PI-b-PEO-PI), Poly(isopren-b-ethylenoxid-methylmethacrylat)-Blockcopolymere (PI-b-PEO-b-PMMA) und Poly(ethylenoxid)-b-poly(ethylen-altpropylen)-Blockcopolymere (PEO-PEP).

Die amphiphilen Blockcopolymere können insbesondere als Diblock, Triblock oder Tetrablock vorliegen. Bei Multiblocks, d.h. insbesondere bei Tri- oder Tetrablocks, können diese linear oder verzweigt, insbesondere als Sternblock (star block), vorliegen.

Besonders geeignet als amphiphile Blockcopolymere haben sich solche, wie sie unter dem Handelsnamen Fortegra™, insbesondere Fortegra™ 100, von Dow Chemical, vertrieben werden, verwiesen

In einer weiteren Ausführungsform ist der polymere Schlagzähigkeitsmodifikator **D** ein Core-Shell Polymer. Core-Shell-Polymere bestehen aus einem elastischen Kernpolymer und einem starren Schalen-Polymer. Insbesondere geeignete Core-Shell-Polymere bestehen aus einem Kern (Core) aus elastischem Acrylat- oder Butadien-Polymer, den eine starre Schale (Shell) eines starren thermoplastischen Polymers umhüllt. Diese Core-Shell Struktur bildet sich entweder spontan durch Entmischen, bzw. Selbstorganisation, eines Blockcopolymeren oder ist durch die Polymerisationsführung als Latex oder Suspensions-polymerisation mit nachfolgender Pfropfung vorgegeben. Bevorzugte Core-Shell-Polymere sind sogenannte MBS Polymere, welche kommerziell unter dem Handelsnamen Clearstrength™ von Atofina, Paraloid™ von Rohm and Haas oder F-351™ von Zeon erhältlich sind.

Besonders bevorzugt sind Core-Shell Polymerpartikel, die bereits als getrockneter Polymerlatex vorliegen. Beispiele hierfür sind GENIOPERL M23A von Wacker mit Polysiloxankern und Acrylatschale, strahlungsvernetzte Kautschukpartikel der NEP Reihe, hergestellt von Eliokem oder Nanoprene von Lanxess oder Paraloid EXL von Rohm und Haas.

Weitere vergleichbare Beispiele für Core-Shell-Polymere werden unter dem Namen Albidur^{™} von Nanoresins AG, Deutschland, angeboten.

In einer weiteren Ausführungsform ist der Schlagzähigkeitsmodifikator **D** ein Umsetzungsprodukt eines carboxylierten festen Nitrilkautschuks mit überschüssigem Epoxidharz.

In einer weiteren Ausführungsform ist der polymere Schlagzähigkeitsmodifikator **D** ein blockiertes Polyurethanpolymer der Formel (IV).

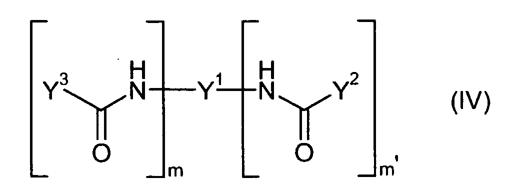

Hierbei stehen m und m' je für Werte zwischen 0 und 8, mit der Massgabe, dass m + m' für einen Wert von 1 bis 8 steht.

Bevorzugt ist m verschieden von 0.

Weiterhin steht Y¹ für ein mit m+m' Isocyanatgruppen terminiertes lineares oder verzweigtes Polyurethanpolymer **PU1** nach dem Entfernen aller endständigen Isocyanatgruppen.

Y² steht unabhängig von einander für eine Blockierungsgruppe, welche sich bei einer Temperatur über 100°C abspaltet.

Y³ steht unabhängig von einander für eine Gruppe der Formel (IV').

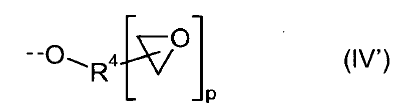

Hierbei steht R⁴ seinerseits für einen Rest eines eine primäre oder sekundäre Hydroxylgruppe enthaltenden aliphatischen, cycloaliphatischen, aromatischen oder araliphatischen Epoxids nach dem Entfernen der Hydroxid- und Epoxidgruppen und p steht für die Werte 1, 2 oder 3.

Unter einem "araliphatischen Rest" versteht man in diesem Dokument eine Aralkylgruppe, d.h. durch eine durch Arylgruppen substituierte Alkylgruppe (vgl. "Aralkyl", Römpp, CD Römpp Chemie Lexikon, Version 1, Stuttgart/New York, Georg Thieme Verlag 1995).

Y² steht insbesondere unabhängig voneinander für einen Substituenten, welcher ausgewählt ist aus der Gruppe bestehend aus

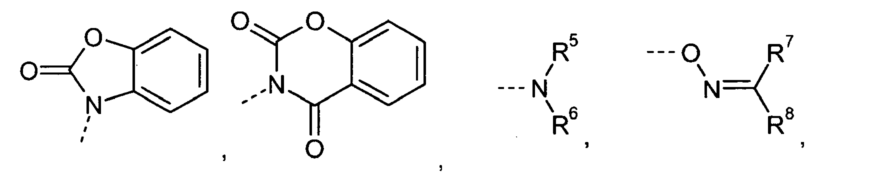

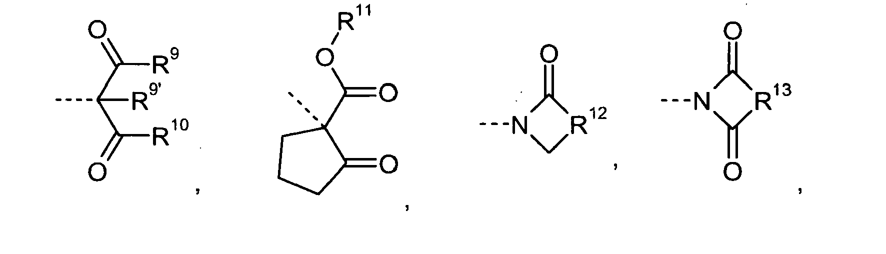

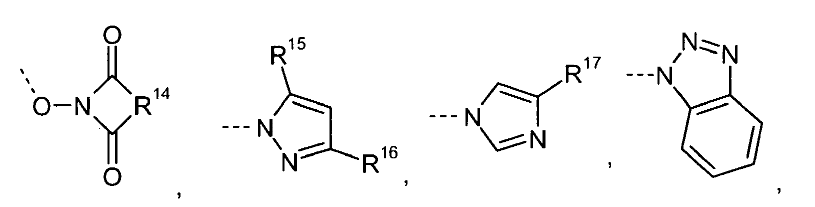

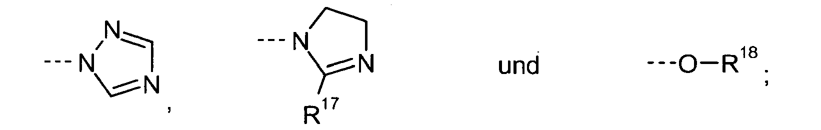

Hierbei stehen R⁵, R⁶, R⁷ und R⁸ je unabhängig voneinander für eine Alkyl- oder Cycloalkyl- oder Aralkyl- oder Arylalkyl-Gruppe oder aber R⁵ bildet zusammen mit R⁶, oder R⁷ zusammen mit R⁸, einen Teil eines 4- bis 7- gliedrigen Rings, welcher allenfalls substituiert ist.

Weiterhin steht R⁹, R^{9'} und R¹⁰ je unabhängig voneinander für eine Alkyl- oder Aralkyl- oder Arylalkyl-Gruppe oder für eine Alkyloxy- oder Aryloxy- oder Aralkyloxy-Gruppe und R¹¹ für eine Alkylgruppe.

R¹², R¹³ und R¹⁴ stehen je unabhängig voneinander für eine Alkylengruppe mit 2 bis 5 C-Atomen, welche gegebenenfalls Doppelbindungen aufweist oder substituiert ist, oder für eine Phenylengruppe oder für eine hydrierte Phenylengruppe und R¹⁵, R¹⁶ und R¹⁷ stehen je unabhängig voneinander für H oder für eine Alkylgruppe oder für eine Arylgruppe oder eine Aralkylgruppe.

Schliesslich steht R¹⁸ für eine Aralkylgruppe oder für eine ein- oder mehrkernige substituierte oder unsubstituierte Aromatengruppe, welche gegebenenfalls aromatische Hydroxylgruppen aufweist.

Als R¹⁸ sind insbesondere einerseits Phenole oder Bisphenole nach Entfernung einer Hydroxylgruppe zu betrachten. Bevorzugte Bespiele für derartige Phenole und Bisphenole sind insbesondere Phenol, Kresol, Resorcinol, Brenzkatechin, Cardanol (3-Pentadecenylphenol (aus Cashewnuss-Schalen-Öl)), Nonylphenol, mit Styrol oder Dicyclopentadien umgesetzte Phenole, Bis-Phenol-A, Bis-Phenol-F und 2,2'-Diallyl-bisphenol-A.

Als R¹⁸ sind andererseits insbesondere Hydroxybenzylalkohol und Benzylalkohol nach Entfernung einer Hydroxylgruppe zu betrachten.

Falls R⁵, R⁶, R⁷, R⁸, R⁹, R^{9'}, R¹⁰, R¹¹, R¹⁵, R¹⁶ oder R¹⁷ für eine Alkylgruppe steht, ist diese insbesondere eine lineare oder verzweigte C₁-C₂₀-Alkylgruppe.

Falls R⁵, R⁶, R⁷, R⁸, R⁹, R^{9'}, R¹⁰, R¹⁵, R¹⁶, R¹⁷ oder R¹⁸ für eine Aralkylgruppe steht, ist diese Gruppierung insbesondere eine über Methylen gebundene aromatische Gruppe, insbesondere eine Benzylgruppe.

Falls R⁵, R⁶, R⁷, R⁸, R⁹, R^{9'} oder R¹⁰ für eine Alkylarylgruppe steht, ist diese insbesondere eine über Phenylen gebundene C₁- bis C₂₀-Alkylgruppe, wie beispielsweise Tolyl oder Xylyl.

Besonders bevorzugte Reste Y² sind Reste, welche ausgewählt sind aus der Gruppe bestehend aus

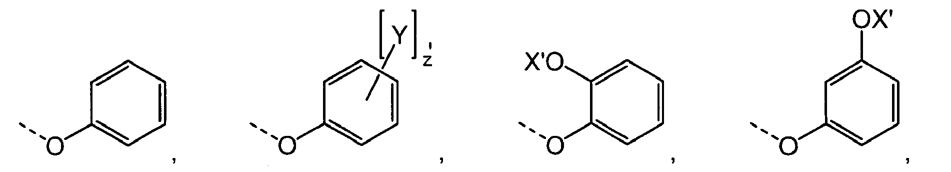

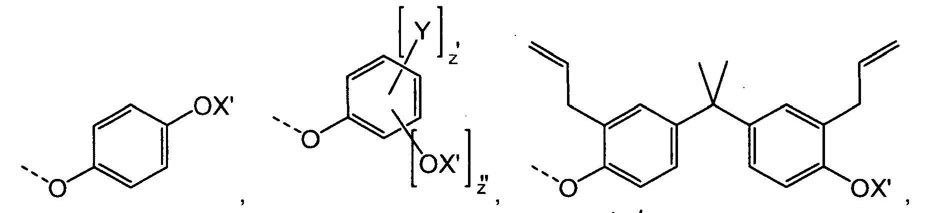

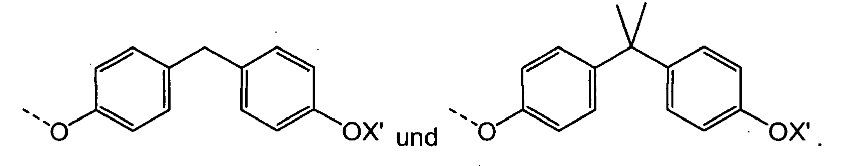

Der Rest Y steht hierbei für einen gesättigten oder olefinisch ungesättigten Kohlenwasserstoffrest mit 1 bis 20 C-Atomen, insbesondere mit 1 bis 15 C-Atomen. Als Y sind insbesondere Allyl, Methyl, Nonyl, Dodecyl oder ein ungesättigter C₁₅-Alkylrest mit 1 bis 3 Doppelbindungen bevorzugt.

Der Rest X' steht für H oder für eine Alkyl-, Aryl- oder Aralkylgruppe, insbesondere für H oder Methyl.

Die Indices z' und z" stehen für die Werte 0, 1, 2, 3, 4 oder 5, mit der Massgabe, dass die Summe z' + z" für einen Wert zwischen 1 und 5 steht.

Die Herstellung des blockierten Polyurethanpolymers der Formel (IV) erfolgt aus dem Isocyanatgruppen terminierten linearen oder verzweigten Polyurethanpolymeren **PU1** mit einer oder mehreren Isocyanat-reaktiven Verbindungen Y²H und oder Y³H. Falls mehrere derartige Isocyanat-reaktive Verbindungen eingesetzt werden, kann die Reaktion sequentiell oder mit einer Mischung dieser Verbindungen erfolgen.

Die Umsetzung erfolgt derart, dass die eine oder die mehreren Isocyanat-reaktiven Verbindungen Y²H und/oder Y³H stöchiometrisch oder im stöchiometrischen Überschuss eingesetzt werden, um zu gewährleisten, dass alle NCO-Gruppen umgesetzt sind.

Die Isocyanat-reaktive Verbindung Y³H ist eine Monohydroxyl-Epoxidverbindung der Formel (IVa).

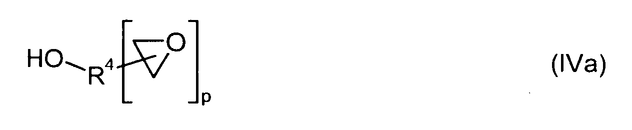

Falls mehrere derartige Monohydroxyl-Epoxidverbindungen eingesetzt werden, kann die Reaktion sequentiell erfolgen oder mit einer Mischung dieser Verbindungen erfolgen.

Die Monohydroxyl-Epoxidverbindung der Formel (IVa) weist 1, 2 oder 3 Epoxidgruppen auf. Die Hydroxylgruppe dieser Monohydroxyl-Epoxidverbindung (IVa) kann eine primäre oder eine sekundäre Hydroxylgruppe darstellen.

Solche Monohydroxyl-Epoxidverbindungen lassen sich beispielsweise durch Umsetzung von Polyolen mit Epichlorhydrin erzeugen. Je nach Reaktionsführung entstehen bei der Umsetzung von mehrfunktionellen Alkoholen mit Epichlorhydrin als Nebenprodukte auch die entsprechenden Monohydroxyl-Epoxidverbindungen in unterschiedlichen Konzentrationen. Diese lassen sich durch übliche Trennoperationen isolieren. In der Regel genügt es aber, das bei der Glycidylisierungsreaktion von Polyolen erhaltene Produktgemisch aus vollständig und partiell zum Glycidylether reagiertem Polyol einzusetzen. Beispiele solcher hydroxylhaltigen Epoxide sind Butandiolmonoglycidylether (enthalten in Butandioldiglycidylether), Hexandiolmonoglycidylether (enthalten in Hexandioldiglycidylether), Cyclohexandimethanolglycidylether, Trimethylolpropandiglycidylether (als Gemisch enthalten in Trimethylolpropantriglycidylether), Glycerindiglycidylether (als Gemisch enthalten in Glycerintriglycidylether), Pentaerythrittriglycidylether (als Gemisch enthalten in Pentaerythrittetraglycidylether). Vorzugsweise wird Trimethylolpropandiglycidylether, welcher zu einem relativ hohen Anteil in üblich hergestellten Trimethylolpropantriglycidylether vorkommt, verwendet.

Es können aber auch andere ähnliche hydroxylhaltige Epoxide, insbesondere Glycidol, 3-Glycidyloxybenzylalkohol oder Hydroxymethyl-cyclohexenoxid eingesetzt werden. Weiterhin bevorzugt ist der β-Hydroxyether der Formel (IVb), der in handelsüblichen flüssigen Epoxidharzen, hergestellt aus Bisphenol-A (R = CH₃) und Epichlorhydrin, zu etwa 15 % enthalten ist, sowie die entsprechenden β-Hydroxyether der Formel (IVb), die bei der Reaktion von Bisphenol-F (R = H) oder des Gemisches von Bisphenol-A und Bisphenol-F mit Epichlorhydrin gebildet werden.

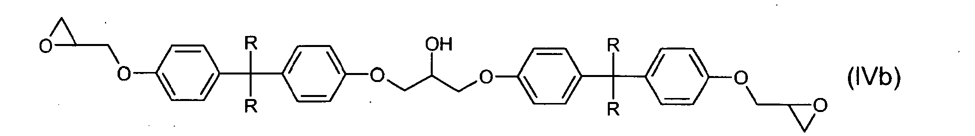

Weiterhin bevorzugt sind auch Destillationsrückstände, welche bei der Herstellung von hochreinen, destillierten Epoxid-Flüssigharzen anfallen. Solche Destillationsrückstände weisen eine bis zu drei Mal höhere Konzentration an hydroxylhaltigen Epoxiden auf als handelübliche undestillierte Epoxid-Flüssigharze. Im Weiteren können auch unterschiedlichste Epoxide mit einer β-Hydroxyether-Gruppe, hergestellt durch die Reaktion von (Poly-)Epoxiden mit einem Unterschuss von einwertigen Nukleophilen wie Carbonsäuren, Phenolen, Thiolen oder sec.- Aminen, eingesetzt werden.

Der Rest R⁴ ist insbesondere bevorzugt ein dreiwertiger Rest der Formel 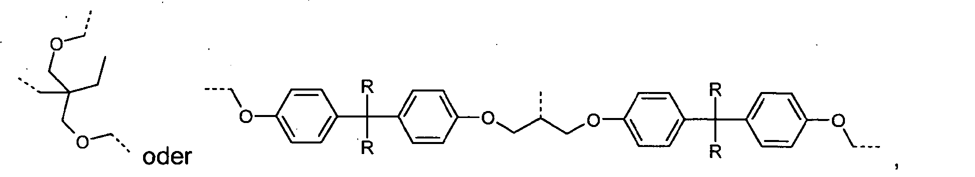 wobei R für Methyl oder H steht.

Die freie primäre oder sekundäre OH-Funktionalität der Monohydroxyl-Epoxidverbindung der Formel (IVa) lässt eine effiziente Umsetzung mit terminalen Isocyanatgruppen von Polymeren zu, ohne dafür unverhältnismässige Überschüsse der Epoxidkomponente einsetzen zu müssen.

Das Polyurethanpolymer **PU1,** auf dem Y¹ basiert, lässt sich aus mindestens einem Diisocyanat oder Triisocyanat sowie aus mindestens einem Polymeren **Q_{PM}** mit endständigen Amino-, Thiol- oder Hydroxylgruppen und / oder aus einem, gegebenenfalls substituierten, Polyphenol **Q_{PP}** herstellen.

Geeignete Diisocyanate sind beispielsweise aliphatische, cycloaliphatische, aromatische oder araliphatische Diisocyanate, insbesondere jene, welche als Diisocyanat der Formel (II a) bereits vorgängig erwähnt wurden. Bevorzugt sind HDI, IPDI, MDI oder TDI.

Geeignete Triisocyanate sind beispielsweise Trimere oder Biurete von aliphatischen, cycloaliphatischen, aromatischen oder araliphatischen Diisocyanaten, insbesondere die Isocyanurate und Biurete, welche als Polyisocyanate der Formel (II a) bereits vorgängig erwähnt wurden.

Selbstverständlich können auch geeignete Mischungen von Di- oder Triisocyanaten eingesetzt werden.

Als Polymere **Q_{PM}** mit endständigen Amino-, Thiol- oder Hydroxylgruppen sind insbesondere Polymere **Q_{PM}** mit zwei oder drei endständigen Amino-, Thiol- oder Hydroxylgruppen geeignet.

Als derartige geeignete Polymere **Q_{PM}** gelten insbesondere diejenigen, wie sie beispielsweise in WO 2008/049857 A1, insbesondere als **Q_{PM}** auf Seite 7, Zeile 25 bis Seite 11, Zeile 20, deren Inhalt hiermit insbesondere durch Bezugnahme eingeschlossen wird, offenbart sind.

Die Polymere **Q_{PM}** weisen vorteilhaft ein Equivalenzgewicht von 300 - 6000, insbesondere von 600 - 4000, bevorzugt von 700 - 2200 g/Equivalent NCO-reaktiver Gruppen auf.

Als Polymere **Q_{PM}** eignen sich insbesondere Polyoxyalkylenpolyole, auch Polyetherpolyole genannt, Hydroxyterminierte Polybutadienpolyole, Styrol-Acrylnitril gepfropfte Polyetherpolyole, Polyhydroxyterminierte Acrylnitril/Butadien-Copolymere, Polyesterpolyole sowie Polycarbonatpolyole.

Weiterhin besonders geeignet als Polymere **Q_{PM}** haben sich amphiphile Blockcopolymere, welche mindestens eine Hydroxylgruppe aufweisen, insbesondere solche, wie sie unter dem Handelsnamen Fortegra™, insbesondere Fortegra™ 100, von Dow Chemical, vertrieben werden, erwiesen.

Als Polyphenol **Q_{PP}** sind insbesondere geeignet Bis-, Tris- und Tetraphenole. Hierunter werden nicht nur reine Phenole, sondern gegebenenfalls auch substituierte Phenole verstanden. Die Art der Substitution kann sehr vielfältig sein. Insbesondere wird hierunter eine Substitution direkt am aromatischen Kern, an den die phenolische OH-Gruppe gebunden ist, verstanden. Unter Phenolen werden weiterhin nicht nur einkernige Aromaten, sondern auch mehrkernige oder kondensierte Aromaten oder Heteroaromaten verstanden, welche die phenolische OH-Gruppe direkt am Aromaten beziehungsweise Heteroaromaten aufweisen.

Besonders eignen sich die Bis- und Trisphenole. Als Bisphenole oder Trisphenole sind beispielsweise geeignet 1,4-Dihydroxybenzol, 1,3-Dihydroxybenzol, 1,2-Dihydroxybenzol, 1,3-Dihydroxytoluol, 3,5-Dihydroxybenzoate, 2,2-Bis(4-hydroxyphenyl)propan (=Bisphenol-A), Bis(4-hydroxyphenyl)methan (=Bisphenol-F), Bis(4-hydroxyphenyl)sulfon (=Bisphenol-S), Naphtoresorcin, Dihydroxynaphthalin, Dihydroxyanthrachinon, Dihydroxy-biphenyl, 3,3-bis(p-hydroxyphenyl)phthalide, 5,5-Bis(4-hydroxyphenyl)hexahydro-4,7-methanoindan, Phenolpthalein, Fluorescein, 4,4'-[bis-(hydroxyphenyl)-1,3-Phenylene-bis-(1 -Methyl-ethyliden)] (=Bisphenol-M), 4,4'-[bis-(hydroxyphenyl)-1,4-Phenylenebis-(1-Methyl=ethyliden)] (=Bisphenol-P), 2,2'-Diallyl-bisphenol-A, Diphenole und Dikresole hergestellt durch Umsetzung von Phenolen oder Kresolen mit Di-isopropylidenbenzol, Phloroglucin, Gallsäureester, Phenol- oder Kresolnovolacke mit -OH-Funktionalität von 2.0 bis 3.5 sowie alle Isomeren der vorgenannten Verbindungen.

Weiterhin eignen sich als in der Zusammensetzung vorhandenen polymeren Schlagzähigkeitsmodifikator **D** jene, wie sie in den folgenden Artikel bzw. Patentschriften, deren Inhalt hiermit durch Referenz mit eingeschlossen wird, offenbart sind: EP 0 308 664 A1, insbesondere Formel (1), besonders Seite 5, Zeile 14 bis Seite 13, Zeile 24; EP 0 338 985 A1, EP 0 353 190 A1, WO 00/20483 A1, insbesondere Formel (I), besonders Seite 8, Zeile 18 bis Seite 12, Zeile 2; WO 01/94492 A1, insbesondere die als D) und E) bezeichneten Reaktionsprodukte, besonders Seite 10, Zeile 15 bis Seite 14, Zeile 22; WO 03/078163 A1, insbesondere das als B) bezeichnete Acrylat-terminierte Polyurethanharz, besonders Seite 14, Zeile 6 bis Seite 14, Zeile 35; WO 2005/007766 A1, insbesondere Formel (I) oder (II), besonders Seite 4, Zeile 5 bis Seite 11, Zeile 20; EP 1 728 825 A1, insbesondere Formel (I), besonders Seite 3, Zeile 21 bis Seite 4, Zeile 47; WO 2006/052726 A1, insbesondere das als b) bezeichnete amphiphilic block copolymer, besonders Seite 6, Zeile 17 bis Seite 9, Zeile 10; WO 2006/052729 A1, insbesondere das als b) bezeichnete amphiphilic block copolymer, besonders Seite 6, Zeile 25 bis Seite 10, Zeile 2; T.J. Hermel-Davidock et al., J.Polym. Sci. Part B: Polym. Phys. 2007, 45, 3338-3348, insbesondere die amphiphilen Blockcopolymere, besonders Seite 3339, 2. Spalte bis 3341 2.Spalte; WO 2004/055092 A1, insbesondere Formel (1), besonders Seite 7, Zeile 28 bis Seite 13, Zeile 15. WO 2005/007720 A1, insbesondere Formel (1), besonders Seite 8, Zeile 1 bis Seite 17, Zeile 10; WO 2007/020266 A1, insbesondere Formel (I), besonders Seite 3, Zeile 1 bis Seite 11, Zeile 6, WO 2008/049857 A1, insbesondere Formel (1), besonders Seite 3, Zeile 5 bis Seite 6, Zeile 20, WO 2008/049858 A1, insbesondere Formel (I) und (II) , besonders Seite 6, Zeile 1 bis Seite 12, Zeile 15, WO 2008/049859 A1, insbesondere Formel (1), besonders Seite 6, Zeile 1 bis Seite 11, Zeile 10, WO 2008/049860 A1, insbesondere Formel (1), besonders Seite 3, Zeile 1 bis Seite 9, Zeile 6, sowie DE-A-2 123 033, US 2008/0076886 A1, WO 2008/016889 und WO 2007/025007.

Besonders bevorzugt als polymere Schlagzähigkeitsmodifikatoren **D** sind die vorgängig im Detail beschriebenen funktionalisierten Acrylnitril/Butadien-Copolymere **D1,** die bei Raumtemperatur festen Blockcopolymere **CP**, die amphiphilen Blockcopolymere, die Core-Shell Polymere sowie die blockierten Polyurethanpolymere der Formel (IV).

Meist bevorzugt als polymere Schlagzähigkeitsmodifikatoren **D** sind die vorgängig im Detail beschriebenen funktionalisierten Acrylnitril/Butadien-Copolymere **D1** sowie die blockierten Polyurethanpolymere der Formel (IV).

Es hat sich gezeigt, dass in der Zusammensetzung vorteilhaft mehrere polymere Schlagzähigkeitsmodifikatoren **D** vorhanden sind.

Es ist dem Fachmann klar, dass neben einem polymeren Schlagzähigkeitsmodifikator **D** weitere Mittel zur Erhöhung der Schlagzähigkeit zugegeben werden können. Beispielsweise sind dies organische Ionen-getauschte Schichtmineralien, bei welchem zumindest ein Teil der Kationen durch organische Kationen oder bei welchen zumindest ein Teil der Anionen durch organische Anionen ausgetauscht worden sind. Als Schichtmineralien sind insbesondere Phyllosilikate, wie Kaolinit, Montmorillionit, Hectorit oder IIIit, bzw. Bentonit geeignet.

Bevorzugte Kationen-getauschte Schichtminerale sind dem Fachmann unter dem Term Organoclay oder Nanoclay bekannt und sind kommerziell zum Beispiel unter den Gruppennamen Tixogel® oder Nanofil® (Südchemie), Cloisite® (Southern Clay Products) oder Nanomer® (Nanocor Inc.) oder Garmite® (Rockwood) erhältlich.

Weiterhin enthält die hitzehärtende Epoxidharzzusammensetzung mindestens ein bei Raumtemperatur festes Homopolymer **HP** eines olefinisch ungesättigten Monomers **M.** Derartige Homopolymere **HP** sind durch radikalische Polymerisation eines olefinisch ungesättigten Monomers **M** herstellbar.

Es ist bevorzugt, wenn das feste Homopolymer **HP** sich gut in dem Epoxidharz **A1** löst.

Bevorzugt ist das Homopolymer **HP** ein Homopolymer eines Monomers **M,** welches ausgewählt ist aus der Gruppe bestehend aus Acrylsäure, Methacrylsäure, Acrylsäureester, Methacrylsäurester, Styrol, bevorzugt Methyl(meth)acrylat und Styrol.

Meist bevorzugt als Homopolymer **HP** sind Polystyrol und Poly(methylmethacrylat).

Das Homopolymer **HP** ist bei Raumtemperatur fest. Insbesondere lässt es sich bei Raumtemperatur zu schüttfähigen Pulvern zerkleinern.

Vorzugsweise weist das bei Raumtemperatur feste Homopolymer **HP** eine Glasübergangstemperatur von mehr als 100°C auf. Meist bevorzugt liegt diese Glasübergangstemperatur im Temperaturbereich von zwischen 100°C und 250°C.

Es ist möglich, dass auch Mischungen von unterschiedlichen Homopolymeren **HP** verwendet werden. Es ist dann besonderes vorteilhaft, wenn sich deren Glasübergangstemperaturen mindestens 10°C unterscheiden.

Der Anteil an Homopolymer **HP** ist grösser als der Gewichtsanteil an polymeren Schlagzähigkeitsmodifikatoren **D** und beträgt vorzugsweise 5 - 35 Gewichts-%, insbesondere 5 - 20 Gewichts-%, bevorzugt 6 - 15 Gewichts-%, am Gewicht der hitzehärtenden Epoxidharzzusammensetzung.

Durch die Verwendung von Homopolymeren **HP** lässt sich ein hoher Gehalt von Epoxidfestharz **A2** erreichen. Dies äussert sich insbesondere dadurch, dass das Gewichtsverhältnis von Epoxid-Festharz **A2** zu Epoxid-Flüssigharz **A1** vorzugsweise einen Wert von 0.2 bis 5, bevorzugt 1 bis 2.5, beträgt.

Weiterhin enthält die hitzehärtende Epoxidharzzusammensetzung mindestens einen Härter **B** für Epoxidharze, welcher durch erhöhte Temperatur aktiviert wird.

Der wärmeaktivierbare Härter **B** ist insbesondere ausgewählt aus der Gruppe bestehend aus Dicyandiamid, Guanamine, Guanidine, Aminoguanidine und deren Derivate; substituierte Harnstoffe, insbesondere 3-(3-Chlor-4-methylphenyl)-1,1-dimethylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron), 3,4-Dichlorphenyl-N,N-dimethylharnstoff (Diuron), N,N-Dimethylharnstoff, N-iso-Butyl-N',N'-dimethylharnstoff, 1,1'-(Hexan-1,6-diyl)bis(3,3'-dimethylharnstoff) sowie Imidazole, lmidazol-Salze, Imidazoline und Amin-Komplexe.

Dieser wärmeaktivierbare Härter **B** ist insbesondere bei einer Temperatur von 100 - 220 °C, insbesondere von 120 - 200°C, bevorzugt zwischen 160 und 190°C, aktivierbar.

Besonders bevorzugt als Härter **B** ist Dicyandiamid.

Vorteilhaft beträgt der Gesamtanteil des Härters **B** 1 - 10 Gewichts-%, vorzugsweise 2 - 8 Gewichts-%, bezogen auf das Gewicht der gesamten Zusammensetzung.

Weiterhin enthält die Zusammensetzung vorzugsweise zusätzlich mindestens einen Füllstoff **F.** Bevorzugt handelt es sich hierbei um Glimmer, Talk, Kaolin, Wollastonit, Feldspat, Syenith, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Farbpigmente. Als Füllstoff **F** sind sowohl die organisch beschichteten als auch die unbeschichteten kommerziell erhältlichen und dem Fachmann bekannten Formen gemeint.

Ein weiteres Beispiel sind funktionalisierte Alumoxane, wie sie z. B. in US 6,322,890 beschrieben sind und deren Inhalt hiermit durch Bezugnahme miteingeschlossen wird.

Vorteilhaft beträgt der Gesamtanteil des gesamten Füllstoffs **F** 3 - 50 Gewichts-%, vorzugsweise 5 - 35 Gewichts-%, insbesondere 5 - 25 Gewichts-%, bezogen auf das Gewicht der gesamten Zusammensetzung.

Weiterhin enthält die Zusammensetzung vorzugsweise zusätzlich mindestens einen Epoxidgruppen-tragenden Reaktivverdünner **G**. Bei diesen Reaktivverdünnern **G** handelt es sich insbesondere um:
- Glycidylether von monofunktionellen gesättigten oder ungesättigten, verzweigten oder unverzweigten, zyklischen oder offenkettigen C₄ - C₃₀ Alkoholen, insbesondere ausgewählt aus der Gruppe bestehend aus Butanolglycidylether, Hexanolglycidylether, 2-Ethylhexanolglycidylether, Allylglycidylether, Tetrahydrofurfuryl- und Furfurylglycidylether, Trimethoxysilylglycidylether.
- Glycidylether von difunktionellen gesättigten oder ungesättigten, verzweigten oder unverzweigten, zyklischen oder offenkettigen C₂ - C₃₀-Alkolen, insbesondere ausgewählt aus der Gruppe bestehend aus Ethylenglykol-, Butandiol-, Hexandiol-, Oktandiolgylcidylether, Cyclohexandimethanoldigylcidylether und Neopentylglycoldiglycidylether.
- Glycidylether von tri- oder polyfunktionellen, gesättigten oder ungesättigten, verzweigten oder unverzweigten, zyklischen oder offenkettigen Akoholen wie epoxidiertes Rhizinusöl, epoxidiertes Trimethylolpropan, epoxidiertes Pentaerythrol oder Polyglycidylether von aliphatischen Polyolen wie Sorbitol, Glycerin oder Trimethylolpropan.
- Glycidylether von Phenol- und Anilinverbindungen insbesondere ausgewählt aus der Gruppe bestehend aus Phenylglycidylether, Kresylglycidylether, p-tert.-Butylphenylglycidylether, Nonylphenolglycidylether, 3-n-Pentadecenyl-glycidylether (aus Cashewnuss-Schalen-Öl), N,N-Diglycidylanilin und Triglycdiyl von p-Aminophenol.
- Epoxidierte Amine wie N, N-Diglycidylcyclohexylamin.
- Epoxidierte Mono- oder Dicarbonsäuren insbesondere ausgewählt aus der Gruppe bestehend aus Neodecansäure-glycidylester, Methacrylsäureglycidylester, Benzoesäureglycidylester, Phthalsäure-, Tetra- und Hexahydrophthalsäurediglycidylester und Diglycidylester von dimeren Fettsäuren sowie Terephthalsäure- und Trimelitsäuregylcidylester.
- Epoxidierte di- oder trifunktionelle, nieder- bis hochmolekulare Polyetherpolyole, insbesondere Polyethylenglycol-diglycidylether oder Polypropyleneglycol-diglycidylether.

Besonders bevorzugt sind Hexandioldiglycidylether, Kresylglycidylether, p-*tert*.-Butylphenylglycidylether, Polypropylenglycoldiglycidylether und Polyethylenglycoldiglycidylether.

Vorteilhaft beträgt der Gesamtanteil des epoxidgruppentragenden Reaktivverdünners **G** 0.1 - 20 Gewichts-%, vorzugsweise 1 - 8 Gewichts-%, bezogen auf das Gewicht der gesamten Zusammensetzung.

Die Zusammensetzung kann weitere Bestandteile, insbesondere Katalysatoren, Stabilisatoren, insbesondere Hitze- und/oder Lichtstabilisatoren, Thixotropiermittel, Weichmacher, Lösungsmittel, mineralische oder organische Füllstoffe, Treibmittel, Farbstoffe und Pigmente, Korrosionsschutzmittel, tenside, Entschäumer und Haftvermittler umfassen.

Als Weichmacher eignen sich insbesondere Phenol-Alkylsulfonsäureester oder Benzolsulfonsäure-N-butylamid, wie sie als Mesamoll® bzw. Dellatol BBS von Bayer kommerziell erhältlich sind.

Als Stabilisatoren eignen sich insbesondere gegebenenfalls substituierte Phenole, wie Butylhydroxytoluol (BHT) oder Wingstay® T (Elikem), sterisch gehinderte Amine oder N-Oxylverbindungen wie TEMPO (Evonik).

In einer besonders bevorzugten Ausführungsform enthält die hitzehärtende Epoxidharzzusammensetzung weiterhin mindestens ein physikalisches oder chemisches Treibmittel, insbesondere in einer Menge von 0.1 - 3 Gewichts-%, bezogen auf das Gewicht der Zusammensetzung. Bevorzugte Treibmittel sind chemische Treibmittel, welche beim Erhitzen, insbesondere auf eine Temperatur von 100 bis 200 °C ein Gas freisetzen.

Es kann sich hierbei um exotherme Treibmittel handeln, wie beispielsweise Azoverbindungungen, Hydrazinderivate, Semicarbazide oder Tetrazole handeln. Bevorzugt sind Azodicarbonamid und Oxy-bis (Benzenesulfonyl-hydrazid), die bei der Zersetzung Energie freisetzen. Weiterhin geeignet sind auch endotherme Treibmittel, wie beispielsweise Natriumbicarbonat/Zitronensäure - Mischungen. Derartige chemische Treibmittel sind beispielsweise unter dem Namen Celogen™ der Firma Chemtura erhältlich. Ebenfalls geeignet sind physikalische Treibmittel, wie sie unter dem Handelsnamen Expancel™ der Firma Akzo Nobel vertrieben werden.

Besonders geeignete Treibmittel sind solche, wie sie unter dem Handelsnamen Expancel™ der Firma Akzo Nobel oder Celogen™ der Firma Chemtura erhältlich sind.

Die nicht ausgehärtete hitzehärtende Epoxidharzzusammensetzung ist bei Raumtemperatur fest und weist eine klebfreie Oberfläche auf. Sie kann einfach in Form von Pellets oder Granulaten gebracht werden und lässt sich so einfach dosieren. Beim Erhitzen wird die Epoxidharzzusammensetzung plastisch und lässt sich einfach umformen. Für das Herstellen von Formteilen können übliche Umformverfahren verwendet werden. Insbesondere sind diese Umformverfahren Extrusion, Stanzen, Kalandrieren sowie Spritzgiessen. Es ist dem Fachmann klar, dass für das Umformen bei erhöhter Temperatur die Temperatur unterhalb der Aktivierungstemperatur für den Härter **B** liegen muss, um eine vorzeitige ungewollte Reaktion zu verhindern. Es ist deshalb bevorzugt, dass jegliche Umformprozesse bei einer Temperatur die mindestens 20°C unter der Aktivierungstemperatur des Härters **B** liegt. Typischerweise liegt die Umformungstemperatur zwischen 50 und 110°C.

Nach Aushärtung bei einer Temperatur über der Aktivierungstemperatur des Härters **B** zeichnen sich die beschriebenen hitzehärtenden Epoxidharzzusammensetzungen durch eine hohe Schlagzähigkeit sowie eine hohe Glasübergangstemperatur, typischerweise von mehr als 110°C, aus. Es lassen sich auf einfache Art und Weise Glasübergangstemperatur, typischerweise von mehr als 115°C, zuweilen sogar über 125 °C, erreichen.

Es hat sich gezeigt, dass der polymeren Schlagzähigkeitsmodifikator **D** und das bei Raumtemperatur feste Homopolymer **HP** in den Epoxidharzen weitgehend gelöst vorliegt und dass beim Aushärten unter Erhitzen eine Phasenseparierung erfolgt. Es ist hierbei wesentlich, dass die kontinuierliche Phase durch die Epoxidharze **A1** und **A2** gebildet wird und nicht etwa durch den Schlagzähigkeitsmodifikator **D,** wie dies bei höheren Gehalten als für diese Erfindung gefordert, erfolgt. Es ist somit für das Wesen der Erfindung wesentlich, dass der Gehalt des Schlagzähigkeitsmodifikator **D** die vorgeschriebenen Grenzen nicht überschreitet. Weiterhin ist es wesentlich, dass die Menge des die Gewichtsmenge des Raumtemperatur festen Homopolymeres **HP** grösser als die Gewichtsmenge des Schlagzähigkeitsmodifikators. **D** ist. Ist dies nämlich nicht der Fall, dann stellt sich nicht die gewünschte Morphologie ein.

Es hat sich gezeigt, dass sich die beschriebenen hitzehärtenden Epoxidharzzusammensetzungen besonders als einkomponentige Klebstoffe eignen. Ein derartiger einkomponentiger Klebstoff weist breite Einsatzmöglichkeiten auf. Insbesondere sind hiermit hitzehärtende einkomponentige Klebstoffe realisierbar, die sich durch eine hohe Schlagzähigkeit auszeichnen. Solche Klebstoffe werden für das Verkleben von hitzestabilen Materialien benötigt. Unter hitzestabilen Materialien werden Materialien verstanden, welche bei einer Aushärtetemperatur von 100 - 220 °C, vorzugsweise 120 - 200°C zumindest während der Aushärtezeit formstabil sind. Insbesondere handelt es sich hierbei um Metalle und Kunststoffe wie ABS, Polyamid, Polyphenylenether, Verbundmaterialien wie SMC, ungesättigte Polyester GFK, Epoxid- oder Acrylatverbundwerkstoffe. Besonders hitzestabile Kunststoffe sind weiterhin Poly(phenylenether), Polysulfone oder Polyethersulfone,

Bevorzugt ist die Anwendung, bei der zumindest ein Material ein Metall ist. Insbesondere handelt es sich beim Metall um ein Metall, welches durch eine kathodische Tauchlackierung (KTL) beschichtet worden ist.

Als besonders bevorzugte Verwendung gilt das Verkleben von gleichen oder verschiedenen Metallen, insbesondere im Rohbau in der Automobilindustrie. Die bevorzugten Metalle sind vor allem Stahl, insbesondere elektrolytisch verzinkter, feuerverzinkter, beölter Stahl, Bonazinkbeschichteter Stahl, und nachträglich phosphatierter Stahl, sowie Aluminium insbesondere in den im Autobau typischerweise vorkommenden Varianten.

Ein solcher Klebstoff wird insbesondere zuerst mit den zu verklebenden Materialien bei einer Temperatur von zwischen 10° C und 80°C, insbesondere zwischen 10°C und 60°C, kontaktiert und später ausgehärtet bei einer Temperatur von typischerweise 100 - 220 °C, vorzugsweise 120 - 200°C.

Ein weiterer Aspekt der vorliegenden Erfindung betrifft deshalb ein Verfahren zur Verklebung von hitzestabilen Substraten, welches die Schritte umfasst:
i) Applizieren einer hitzehärtenden Epoxidharzzusammensetzung , wie sie vorgängig im Detail beschrieben wurde, auf die Oberfläche eines hitzestabilen Substrates **S1,** insbesondere eines Metalls;
ii) Kontaktieren der applizierten hitzehärtenden Epoxidharzzusammensetzung mit der Oberfläche eines weiteren hitzestabilen Substrates **S2**, insbesondere eines Metalls;
iii) Erhitzen der hitzehärtenden Epoxidharzzusammensetzung auf eine Temperatur von 100 - 220 °C, insbesondere von 120 - 200°C, bevorzugt zwischen 160 und 190°C;
wobei das Substrat **S2** aus dem gleichen oder einem unterschiedlichen Material wie das Substrat **S1** besteht.

Das Substrat **S2** besteht hierbei aus dem gleichen oder einem unterschiedlichen Material wie das Substrat **S1.**

Die hitzestabilen Substrates **S1** und **S2** sind insbesondere die bereits vorgängig erwähnten hitzestabilen Materialien.

Aus einem derartigen Verfahren zum Verkleben von hitzestabilen Materialien resultiert ein verklebter Artikel. Ein derartiger Artikel ist vorzugsweise ein Fahrzeug oder ein Anbauteil eines Fahrzeugs.

Selbstverständlich können mit einer erfindungsgemässen Zusammensetzung neben hitzehärtenden Klebstoffen auch Dichtmassen oder Beschichtungen realisiert werden. Ferner eignen sich die erfindungsgemässen Zusammensetzungen nicht nur für den Automobilbau sondern auch für andere Anwendungsgebiete. Besonders zu erwähnen sind verwandte Anwendungen im Transportmittelbau wie Schiffe, Lastwagen, Busse oder Schienenfahrzeuge oder im Bau von Gebrauchsgütern wie beispielsweise Waschmaschinen.

Die mittels einer erfindungsgemässen Zusammensetzung verklebten Materialien kommen bei Temperaturen zwischen typischerweise 120°C und -40°C, vorzugsweise zwischen 100°C und -40°C, insbesondere zwischen 80°C und -40°C zum Einsatz.

Eine besonders bevorzugte Verwendung der erfindungsgemässen hitzehärtenden Epoxidharzzusammensetzung ist dessen Verwendung als hitzehärtender Rohbauklebstoff im Fahrzeugbau.

Eine weiterhin besonders bevorzugte Verwendung der erfindungsgemässen hitzehärtenden Epoxidharzzusammensetzung ist dessen Verwendung zum Verkleben oder Verstärken von Metallstrukturen oder verstärkendes Verfüllen von Hohlräumen im Fahrzeugbau oder Sandwichpanelbau.

Die hitzehärtende Epoxidharzzusammensetzung kann insbesondere auf einem Träger aufgebracht werden. Derartige Träger sind insbesondere aus einem hitzestabilen Material, wie sie vorgängig bereits als hitzestabile Substarte **S1** erwähnt wurden. Die hitzehärtende Epoxidharzzusammensetzung wird hierbei im geschmolzenen Zustand auf das Trägermittel aufgebracht.

Es lassen sich somit Verstärkungselemente für die Verstärkung von metallischen Strukturen aufweisend einen Träger, auf welchem eine beschriebene hitzehärtende Epoxidharzzusammensetzung aufgebracht ist, einfach realisieren.

Diese Verstärkungselemente werden auf der zu verstärkenden metallischen Struktur fixiert oder in einen Hohlraum der zu verstärkenden metallischen Struktur fixiert. Das Fixieren kann hierbei durch ein Fixiermittel wie durch einen Clip, eine Schraube, einen Haken, eine Niete, eine Schraube, eine Nut oder einen Klebstoff erfolgen oder aber es kann durch geeignete Geometrie der Struktur, welche ein Einklemmen ermöglichen, erfolgen. Somit ist es bevorzugt, dass der Träger ein derartiges Fixierungsmittel aufweist. Insbesondere ist es bevorzugt, wenn die zu verstärkende Struktur ein zum Fixierungsmittel korrespondierendes Gegenstück aufweist, wie zum Beispiel eine vorspringende Kante/Haken oder Schraube/Schraubgewinde.

Ein weiterer Aspekt der vorliegenden Erfindung betrifft somit eine ausgehärtete Epoxidharzzusammensetzung, welche erhalten wird durch das Erhitzen einer vorgängig im Detail beschriebenen hitzehärtenden Epoxidharzzusammensetzung auf eine Temperatur von 100 - 220 °C, vorzugsweise 120 - 200°C.

Insbesondere betrifft ein weiterer Aspekt der vorliegenden Erfindung einen Strukturschaum, welcher durch Erhitzen einer aus einer bereits beschriebenen hitzehärtenden Epoxidharzzusammensetzung, erhalten wird. Es ist dem Fachmann klar, dass für die Bildung eines Strukturschaums die hitzehärtende Epoxidharzzusammensetzung ein physikalisches oder chemisches Treibmittel, insbesondere in einer Menge von 0.1 - 3 Gewichts-%, bezogen auf das Gewicht der Zusammensetzung, als Bestandteil der Zusammensetzung benötigt. Diese besonders bevorzugten hitzehärtenden Epoxidharzzusammensetzungen wurden ebenfalls bereits im Detail vorgängig beschrieben.

Ein Strukturschaum weist die wesentlichen Eigenschaften auf, dass er einerseits beim Erhitzen aufgeschäumt wird und andererseits durch die chemische Aushärtung der Zusammensetzung in der Lage ist, grosse Kräfte zu übertragen und somit eine Struktur, typischerweise eine metallischen Struktur, zu verstärken. Typischerweise werden derartige Strukturschäume in Hohlräumen von metallischen Strukturen eingesetzt. Sie können insbesondere auch als Bestandteil in den vorgängig beschriebenen Verstärkungselementen eingesetzt werden.

Beispielsweise können sie in den Hohlräumen von Tragsäulen einer Verkehrsmittel-Karosserie angebracht werden. Durch den Träger wird dieses Verstärkungselement am gewünschten Ort gehalten. Die Einbringung des Verstärkungselementes erfolgt üblicherweise im Rohbau, d.h. beim Bau der Karosserie. Die Karosserie gelangt nach dem Durchlaufen eines KTL-Bades in einen KTL-Ofen, wo bei einer Temperatur von typischerweise 160 bis 190 °C der KTL-Lack eingebrannt wird. Bei diesen Temperaturen führt das Treibmittel zur Bildung eines Schaums und die hitzehärtende Zusammensetzung reagiert hierbei chemisch unter Vernetzung, was zur Aushärtung des Klebstoffes führt.

Diese Verstärkungselemente deshalb häufig an Orten eingesetzt, bei welchen es nach der Montage aufgrund der Form und/oder des engen Ausmasses solcher Hohlräume vielfach schwierig diese effizient zu verstärken, abzudichten oder die Geräuschübertragung einzudämmen.

Dank dieser Strukturschäume, ist es möglich trotz geringerem Gewicht hohe Festigkeiten und dichte Strukturen zu erhalten. Zudem ist es möglich durch die verfüllende und abdichtende Funktion des Strukturschaums auch den Innenraum von Hohlräumen abzuschotten und dadurch die Fahrgeräusche und Vibrationen markant zu reduzieren.

### Beispiele

Im Folgenden sollen einige Beispiele aufgezeigt werden, welche die Erfindung weiter veranschaulichen, den Umfang der Erfindung aber in keiner Weise beschränken sollen. Die in den Beispielen verwendeten Rohstoffe sind in Tabelle 1 aufgelistet.

**Tabelle1. Eingesetzte Rohstoffe**

| | |
|---|---|
| Verwendete Rohstoffe | Lieferant |
| Araldite® GY250 (Bisphenol-A-diglycidylether = *"GY250"*) | Huntsman |
| Araldite® GT7004 (Epoxid-Festharz = *"GT7004"*) | Huntsman |
| Dicyandiamid | Evonic |
| Polymethylmethacrylat (M_{w} ca. 120'000 g/mol) (= *"PMMA"*) | Sigma Aldrich |
| Polystyrol (M_{w} ca. 200'000 g/mo))( = "*PS*") | Sigma Aldrich |
| Finaclear® 530 (Styrol-Butadien-Styrol-copolymer = *"SBS"*) | Arkema |
| Nanostrength® E40 (Styrol-Butadien-Methylmethacrylat-Triblockcopolymer = *"SBM"*) | Arkema |
| F-351 ™ (Core-Shell-Polymer = *"F-351"*) | Nippon Zeon Chemicals |
| Polydis 3614 (Epoxidharz-modifiziertes CTBN = *"Polydis"*) Celogen AZ 130 (Treibmittel = "*Celogen"*) | Struktol Chemtura |

Es wurden Zusammensetzungen aus den in Tabelle 2 und 3 in Gewichtsteilen angegebenen Bestandteilen hergestellt. Das Vergleichsbeispiel ***Ref.1*** stellt das Beispiel 4 A von US 6,387,470 dar.

### Prüfmethoden:

### Glasüberaanqstemperatur (T_{g})

Die Glasübergangstemperatur wurde mittels DSC bestimmt. Es wurde hierfür ein Gerät Mettler DSC822^{e} verwendet. 10 - 20 mg der Zusammensetzungen wurden jeweils in einen Aluminiumtiegel eingewogen. Nachdem die Probe im DSC während 30 Min. bei 175°C gehärtet worden war, wurde die Probe auf 0°C abgekühlt und anschliessend mit einer Heizrate von 10°C/min bis 180°C aufgeheizt. Die Glasübergangstemperatur wurde mit Hilfe der DSC-Software aus der gemessenen DSC-Kurve bestimmt

### Zugfestigkeit (ZF) und E-Modul (DIN EN ISO 527)

Eine Klebstoffprobe wurde zwischen zwei Teflonpapieren auf eine Schichtdicke von 2mm verpresst. Anschliessend wurde der Klebstoff während 30 Minuten bei 180°C gehärtet. Die Teflonpapiere wurden entfernt und die Probekörper nach DIN-Norm wurden im heissen Zustand ausgestanzt. Die Prüfkörper wurden nach 1 Tag Lagerung unter Normklima mit einer Zuggeschwindigkeit von 2 mm/min gemessen. Die Zugfestigkeit und der E-Modul wurde gemäss DIN EN ISO 527 bestimmt. Beim E-Modul wurde von 0.05 bis 0.25 % Dehnung bestimmt und in Tabelle 2 als "E-Modul_{0.05-0.25%}" angegeben.

### Zugscherfestigkeit (ZSF) (DIN EN 1465)

Die Probekörper wurden aus den beschriebenen Beispiel-Zusammensetzungen und mit elektrolytisch verzinktem DC04 Stahl (eloZn) mit dem Mass 100 x 25 x 1.5 mm hergestellt, dabei betrug die Klebfläche 25 x 10mm bei einer Schichtdicke von 2 mm. Gehärtet wurde 30 Min. bei 180°C. Die Zuggeschwindigkeit betrug 10mm/min.

Die Ergebnisse dieser Prüfungen sind in Tabelle 2 zusammengestellt.

**Tabelle 2. Zusammensetzungen und Ergebnisse.**

| | | ***1*** | ***2*** | ***3*** | ***4*** | ***Ref.1*** |
|---|---|---|---|---|---|---|
| *GY250* | | 24.2 | 24.2 | 29.1 | 29.1 | |
| *GT7004* | | 35.5 | 35.5 | 43.7 | 37.6 | |
| ***HP*** | *PMMA* | | | 7.4 | 8.4 | |
| | *PS* | 16.1 | 16.1 | | | |
| ***D*** | *SBM* | 8.6 | 8.6 | | | |
| | *F-351* | | | 0.7 | | |
| | *Polydis* | | | | 6.0 | |
| *Dicy* | | 2.5 | 2.5 | 3 | 2.8 | |
| Silan | | | | 0.7 | 0.7 | |
| Aerosil | | 3.1 | 3.1 | 5.0 | 5.0 | |
| Kreide | | 5.0 | 5.0 | 5.0 | 5.0 | |
| Glasfasern | | 5.0 | 5.0 | 5.0 | 5.0 | |
| *Celogen* | | | 0.4 | 0.4 | 0.4 | |
| Harnstoffbeschleuniger | | | | 0.4 | 0.4 | |
| Total | | 100 | 100.4 | 100.4 | 100.4 | |
| ***D*** [Gew.-%] | | 16.1 | 16.1 | 7.4 | 6.0 | **25.3** |
| ***HP*/*D*** [Gew.-%/Gew.-%] | | 1.87 | 1.87 | 10.6 | 1.40 | **0.50** |
| | | | | | | |
| *Tg* [°C] | | 123 | 124 | 114.0 | 115.3 | 85.0 |
| *ZF* [MPa] | | 27 | 11 | 20 | 16 | 6 |
| E-Modul₀.₀₅₋₀._{25%}[MPa] | | 2160 | 830 | 1050 | 960 | 900 |
| *ZSF* [MPa] | | 5.5 | 2.62 | 7.9 | 4.9 | 2.5 |

Aus Tabelle 2 ist ersichtlich, dass das Vergleichsbeispiel im Vergleich zu den Beispielen ***1*** bis ***4*** feinen bedeutend tieferen Glasübergangspunkt sowie eine massiv geringere Zugscherfestigkeit, d.h. Haftung, aufweist.
Trotz des geringeren Gehaltes an Schlagzähigkeitsmodifikators weisen die Zusammensetzungen ***1*** bis ***4*** gute Schlagzähigkeiten auf.

Zum Belegen der unterschiedlichen Morphologien wurden die in Tabelle 3 aufgeführten Zusammensetzungen hergestellt und mit Rasterelektronenmikroskop (REM: Hitachi S-3400 N Rückstreuelektronendetektor (BSE)), bzw. mit optischen Mikroskop (Olympus BX51, Hellfeldbeleuchtung) untersucht.

**Tabelle 3. Zusammensetzungen**

| | | ***5*** | ***6*** | ***7*** | ***8*** | ***Ref.2*** |
|---|---|---|---|---|---|---|
| *GY250* | | 27.85 | 37.00 | 34.70 | 41.12 | 41.12 |
| *GT7004* | | 40.85 | 18.49 | 52.05 | 7.26 | 7.26 |
| ***HP*** | *PS* | 18.53 | 31.44 | | 16.15 | 32.22 |
| | *PMMA* | | | 8.88 | | |
| ***D*** | *SBS* | | | | 32.22 | 16.15 |
| | *SBM* | 9.90 | 3.25 | | | |
| | *F-351* | | | 0.75 | | |
| *Dicy* | | 2.87 | 9.82 | 3.62 | 3.25 | 3.25 |
| ***D*** [Gew.-%] | | 9.9% | 3.3% | 0.8% | 16.2% | **32.2%** |
| ***HP*/*D***[Gew.-%/Gew.-%] | | 1.87 | 9.67 | 11.84 | 2.00 | **0.50** |

Alle Proben wurden für die Aufnahmen während 30 Minuten bei 180°C ausgehärtet und geschliffen.

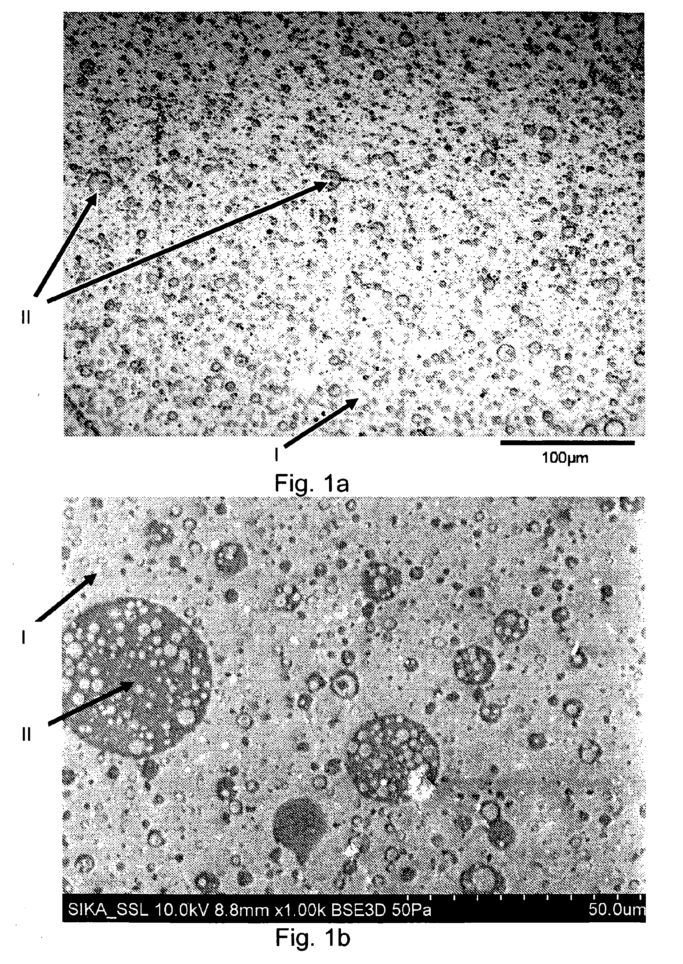

Figur 1a zeigt eine optische Mikroskopaufnahme und Fig. 1b eine REM-Aufnahme des Beispiels ***5***, entsprechend Beispiel ***1*** ohne Aerosil und Füllstoffe.

Fig. 1a und Fig. 1b zeigen klar eine kontinuierliche Phase von Epoxidharz (mit **"I"** bezeichnet) und eine kugelige diskontinuierliche Phase (schwarz) (mit **"II"** bezeichnet) in der Grössenordnung von 1 bis 30 Mikrometer Durchmesser von Polystyrol.

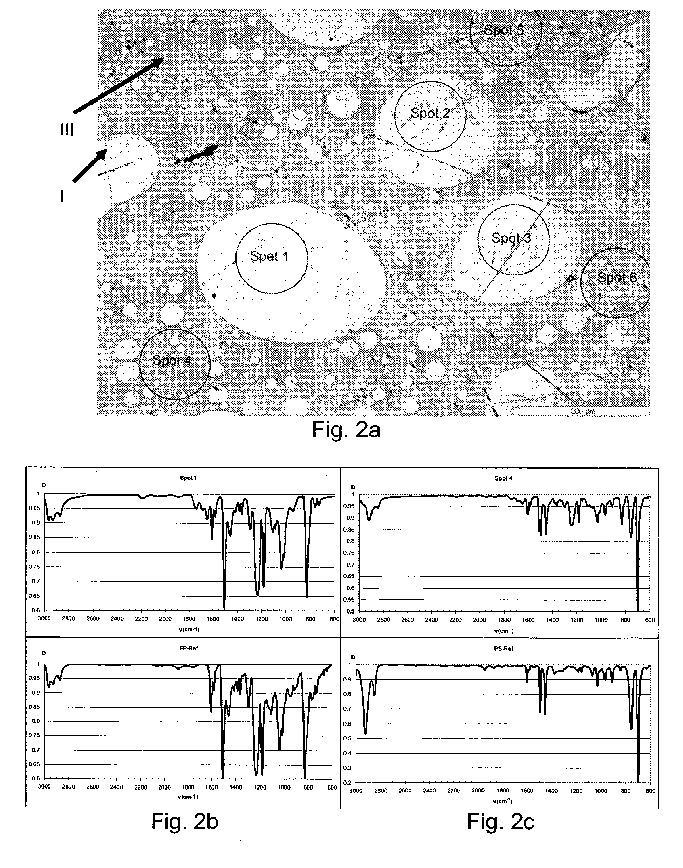

Fig. 2a hingegen zeigt eine optische Mikroskopaufnahme des Vergleichsbeispiels ***Ref.2.*** Sie zeigt klar grosse helle Phasen Epoxidharz (mit **"I"** bezeichnet) in der Grössenordnung von 10 bis 300 Mikrometer in einer kontinuierlichen Phase (grau, mit **"III"** bezeichnet). Mittels Imaging FTIR (Bruker Hyperion 2000, Bruker Tensor 27, ATR-Objektiv (Germanium-Kristall) Spot-Messgrösse ca. 100 µm) wurde an den in der Aufnahme eingezeichneten unterschiedlichen Orten ("Spot 1", "Spot 2", "Spot 3", "Spot 4", "Spot 5" und "Spot 6") jeweils IR-Spekten (Transmission "D") im Bereich zwischen 600 und 3000 Wellenzahlen (v, cm⁻¹) gemessen. Figur 2 b zeigt den Vergleich des IR-Spektrums aus dem Bereich der Phase **I** (oben) von der Stelle "Spot 1" im Vergleich zum Referenzspektrum von ausgehärtetem Epoxydharz "EP-Ref (unten). Figur 2 c hingegen zeigt den Vergleich des IR-Spektrums aus dem Bereich der kontinuierlichen Phase **III** (oben) von der Stelle "Spot 4" im Vergleich zum Referenzspektrum vom verwendeten Polystyrol "PS-Ref"(unten). Die IR Spektren von "Spot 2" und "Spot 3" entsprechen denjenigen von "Spot 1" während die IR-Spektren von "Spot 5" und "Spot 6" denjenigen von "Spot 4" entsprechen. Dies zusammen mit dem Intensitätsvergleich der für Polystyrol typischen IR-Banden (2916, 2848,1448, 964, 748 und 696 cm⁻¹) sowie der für Epoxydharz typischen IR-Banden (2964, 1608, 1508, 1464, 1292, 1232, 1180, 1104, 1036 und 824 cm⁻¹) belegen, dass die grossen hellen Phasen Epoxidharz darstellen, d.h. dass Epoxidharz die diskontinuierliche Phase ("1") bildet, während die kontinuierliche Phase (**"III"**)von Polystyrol gebildet wird.

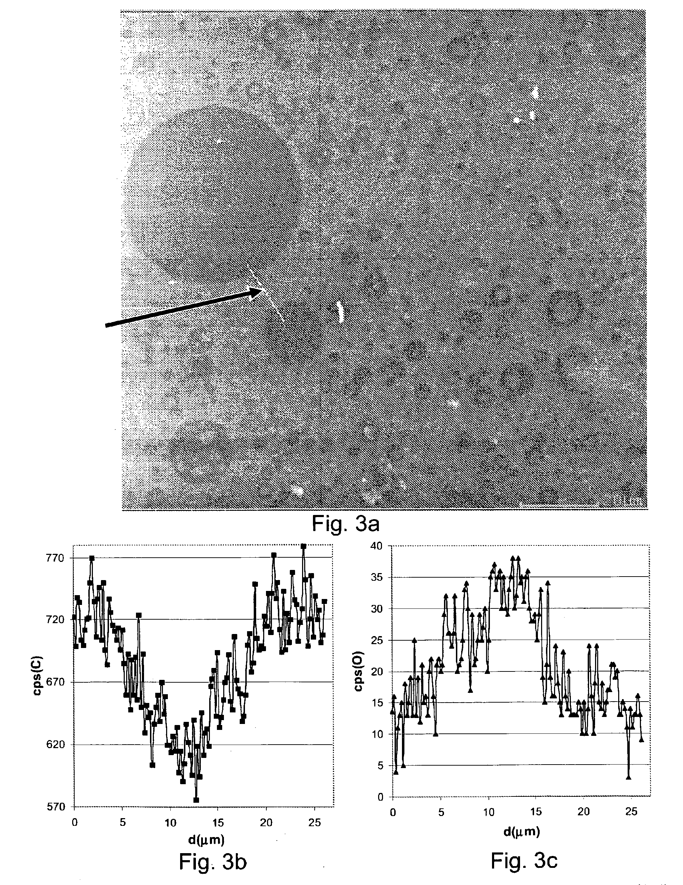

In Figur 3a ist eine REM-Aufnahmen des Beispiels ***6*** aufgezeigt. Aufgrund der bedeutend kleineren Grösse der diskontinuierlichen Phasen in den erfindungsgemässen Beispielen konnte die für ***Ref.2*** verwendete Identifizierungsmethode für die Beispiele ***1*** bis ***4*** bzw. ***5*** bis ***8*** nicht verwendet werden. Deshalb wurde hier zwischen zwei dispersen Phasen ein Scanning EDX (EDX linescan EDAX Genesis Ametek) entlang einer Linie, welche im Bild durch eine weisse Linie angegeben wurde, und mit einem Pfeil angezeigt wurde, aufgenommen. In Figur 3b sind die Intensitäten (cps = counts per second) der K-Linie von Kohlenstoff (cps(C)) (Figur 3b) bzw. von Sauerstoff (cps(O))(Figur 3 c) gegenüber der Distanz (d) zum Anfangspunkt der Linie aufgezeichnet. Diese Darstellungen beweisen, dass sich zwischen den homogenen Phasen Sauerstoffatome gehäuft auftreten, während in der dispersen Phase Kohlenstoff gehäuft auftritt. Dies führt zur Schlussfolgerung, dass Epoxidharz (Sauerstoffatome-aufweisend) die homogene Phase bildet, während das Polystyrol (bestehend aus lediglich Kohlenstoff und Wasserstoff) in der dispersen Phase auftritt.

Ein zu Beispiel ***5*** und ***6*** analoges Verhalten wurde für Beispiele ***7*** und ***8*** gefunden.

## Patentansprüche

1. Hitzehärtende Epoxidharzzusammensetzung enthaltend
- mindestens ein Epoxid-Flüssigharz **A1** mit durchschnittlich mehr als einer Epoxidgruppe pro Molekül;
- mindestens ein Epoxid-Festharz **A2** mit durchschnittlich mehr als einer Epoxidgruppe pro Molekül;
- mindestens einen polymeren Schlagzähigkeitsmodifikator **D;**
- mindestens ein bei Raumtemperatur festes Homopolymer **HP** eines olefinisch ungesättigten Monomers **M;**
- mindestens einen Härter **B** für Epoxidharze, welcher durch erhöhte Temperatur aktiviert wird,
mit der Massgabe, dass der Gewichtsanteil des Schlagzähigkeitsmodifikators **D** an der Epoxidharzzusammensetzung kleiner als 20 Gew.-% ist, und dass die Gewichtsmenge des Raumtemperatur festen Homopolymers **HP** grösser als die Gewichtsmenge des Schlagzähigkeitsmodifikators **D** ist.

2. Hitzehärtende Epoxidharzzusammensetzung gemäss Anspruch 1, **dadurch gekennzeichnet, dass** die Zusammensetzung weiterhin mindestens ein physikalisches oder chemisches Treibmittel, insbesondere in einer Menge von 0.1 - 3 Gewichts-%, bezogen auf das Gewicht der Zusammensetzung, enthält.

3. Hitzehärtende Epoxidharzzusammensetzung gemäss Anspruch 1 oder 2, **dadurch gekennzeichnet, dass** das Homopolymer **HP** ein Homopolymer eines Monomers **M**, welches ausgewählt ist aus der Gruppe bestehend aus Acrylsäure, Methacrylsäure, Acrylsäureester, Methacrylsäurester, Styrol, bevorzugt Methyl(meth)acrylat und Styrol, ist.

4. Hitzehärtende Epoxidharzzusammensetzung gemäss Anspruch 1 oder 2 oder 3, **dadurch gekennzeichnet, dass** der polymere Schlagzähigkeitsmodifikator ein funktionalisiertes, insbesondere carboxyl- oder epoxidterminiertes, Acrylnitril/Butadien-Copolymer **D1** ist.

5. Hitzehärtende Epoxidharzzusammensetzung gemäss Anspruch 1 oder 2 oder 3, **dadurch gekennzeichnet, dass** der polymere Schlagzähigkeitsmodifikator **D** ein Blockcopolymer **CP** aus (Meth)acrylsäureester und mindestens einem weiteren olefinisch ungesättigten Monomer ist.

6. Hitzehärtende Epoxidharzzusammensetzung gemäss Anspruch 1 oder 2 oder 3, **dadurch gekennzeichnet, dass** der polymere Schlagzähigkeitsmodifikator **D** ein amphiphiles Blockcopolymer ist.

7. Hitzehärtende Epoxidharzzusammensetzung gemäss Anspruch 1 oder 2 oder 3, **dadurch gekennzeichnet, dass** der polymere Schlagzähigkeitsmodifikator **D** ein blockiertes Polyurethanpolymer der Formel (IV) ist 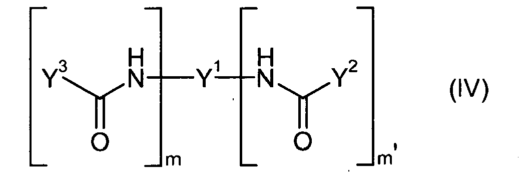 wobei
Y¹ für ein mit m+m' Isocyanatgruppen terminiertes lineares oder verzweigtes Polyurethanpolymer **PU1** nach dem Entfernen aller endständigen Isocyanatgruppen steht;
Y² unabhängig von einander für eine Blockierungsgruppe, welche sich bei einer Temperatur über 100°C abspaltet, steht;
Y³ unabhängig von einander für eine Gruppe der Formel (IV') steht 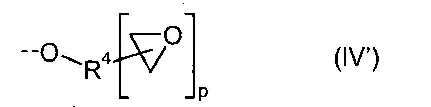 wobei R⁴ für einen Rest eines eine primäre oder sekundäre Hydroxylgruppe enthaltenden aliphatischen, cycloaliphatischen, aromatischen oder araliphatischen Epoxids nach dem Entfernen der Hydroxid- und Epoxidgruppen, steht;
p = 1, 2 oder 3 und
m und m' je für Werte zwischen 0 und 8 stehen, mit der Massgabe, dass m +m' für einen Wert von 1 bis 8 steht.

8. Hitzehärtende Epoxidharzzusammensetzung gemäss Anspruch 1 oder 2 oder 3, **dadurch gekennzeichnet, dass** der polymere Schlagzähigkeitsmodifikator D ein Core-Shell-Polymer ist.

9. Hitzehärtende Epoxidharzzusammensetzung gemäss einem der vorhergehenden Ansprüche, **dadurch gekennzeichnet, dass** der Härter **B** ein Härter ist, welcher ausgewählt ist aus der Gruppe bestehend aus Dicyandiamid, Guanamine, Guanidine, Aminoguanidine und deren Derivate; substituierte Harnstoffe, insbesondere 3-(3-Chlor-4-methylphenyl)-1,1-dimethylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron), 3,4-Dichlorphenyl-N,N-dimethylharnstoff (Diuron), N,N-Dimethylharnstoff, N-iso-Butyl-N',N'-dimethylharnstoff, 1,1'-(Hexan-1,6-diyl)bis(3,3'-dimethylharnstoff) sowie Imidazole, Imidazol-Salze, Imidazoline und Amin-Komplexe.

10. Hitzehärtende Epoxidharzzusammensetzung gemäss einem der vorhergehenden Ansprüche, **dadurch gekennzeichnet, dass** das Gewichtsverhältnis von Epoxid-Flüssigharz **A1** zu Epoxid-Festharz **A2** einen Wert von 0.2 bis 5, bevorzugt 1 bis 2.5, beträgt.

11. Hitzehärtende Epoxidharzzusammensetzung gemäss einem der vorhergehenden Ansprüche, **dadurch gekennzeichnet, dass** das mindestens ein bei Raumtemperatur festes Homopolymer **HP** eine Glasübergangstemperatur von mehr als 100°C aufweist.

12. Verstärkungselement für die Verstärkung von metallischen Strukturen aufweisend einen Träger, auf welchem eine hitzehärtende Epoxidharzzusammensetzung gemäss einem der Ansprüche 1 bis 11 aufgebracht ist.

13. Verfahren zur Verklebung von hitzestabilen Substraten umfassend die Schritte
i) Applizieren einer hitzehärtenden Epoxidharzzusammensetzung gemäss einem der Ansprüche 1 bis 11 auf die Oberfläche eines hitzestabilen Substrates **S1,** insbesondere eines Metalls;
ii) Kontaktieren der applizierten hitzehärtenden Epoxidharzzusammensetzung mit der Oberfläche eines weiteren hitzestabilen Substrates **S2,** insbesondere eines Metalls;
iii) Erhitzen der hitzehärtenden Epoxidharzzusammensetzung auf eine Temperatur von 100 - 220 °C, insbesondere von 120 - 200°C, bevorzugt zwischen 160 und 190°C;
wobei das Substrat **S2** aus dem gleichen oder einem unterschiedlichen Material wie das Substrat **S1** besteht.

14. Verwendung einer Zusammensetzung gemäss einem der Ansprüche 1 bis 11 zum Verkleben oder Verstärken von Metallstrukturen oder verstärkendes Verfüllen von Hohlräumen im Fahrzeugbau oder Sandwichpanelbau.

15. Strukturschaum, erhalten durch Erhitzen einer hitzehärtenden Epoxidharzzusammensetzung gemäss einem der Ansprüche 2 bis 11.

16. Ausgehärtete Epoxidharzzusammensetzung, erhalten durch Erhitzen einer hitzehärtenden Epoxidharzzusammensetzung gemäss einem der Ansprüche 1 bis 11 auf eine Temperatur von 100 - 220 °C, vorzugsweise 120 - 200°C.

## Claims

1. Heat-curable epoxy resin composition comprising
- at least one liquid epoxy resin **A1** having an average of more than one epoxy group per molecule;
- at least one solid epoxy resin **A2** having an average of more than one epoxy group per molecule;
- at least one polymeric impact modifier **D;**
- at least one homopolymer **HP,** solid at room temperature, of an olefinically unsaturated monomer **M;**
- at least one epoxy-resin hardener **B** which is activated via an elevated temperature,
with the proviso that the proportion by weight of the impact modifier **D**, based on the epoxy resin composition, is smaller than 20% by weight, and that the amount by weight of the homopolymer **HP,** solid at room temperature, is greater than the amount by weight of the impact modifier **D.**

2. Heat-curable epoxy resin composition according to Claim 1, **characterized in that** the composition further comprises at least one physical or chemical blowing agent, its amount in particular being from 0.1 to 3% by weight, based on the weight of the composition.

3. Heat-curable epoxy resin composition according to Claim 1 or 2, **characterized in that** the homopolymer **HP** is a homopolymer of a monomer **M** selected from the group consisting of acrylic acid, methacrylic acid, acrylic ester, methacrylic ester, and styrene, preferably methyl (meth)acrylate and styrene.

4. Heat-curable epoxy resin composition according to Claim 1 or 2 or 3, **characterized in that** the polymeric impact modifier is a functionalized, in particular carboxy- or epoxy-terminated, acrylonitrile/butadiene copolymer **D1.**

5. Heat-curable epoxy resin composition according to Claim 1 or 2 or 3, **characterized in that** the polymeric impact modifier **D** is a block copolymer **CP** composed of (meth)acrylic ester and of at least one further olefinically unsaturated monomer.

6. Heat-curable epoxy resin composition according to Claim 1 or 2 or 3, **characterized in that** the polymeric impact modifier **D** is an amphiphilic block copolymer.

7. Heat-curable epoxy resin composition according to Claim 1 or 2 or 3, **characterized in that** the polymeric impact modifier **D** is a capped polyurethane polymer of the formula (IV) 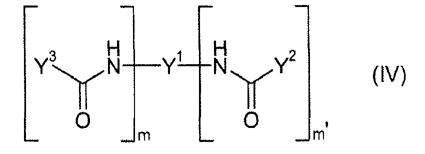 where
Y¹ is a linear or branched polyurethane polymer **PU1** terminated by m+m' isocyanate groups, after removal of all of the terminal isocyanate groups;
Y² is, mutually independently, a capping group which cleaves at a temperature above 100°C;
Y³ is, mutually independently, a group of the formula (IV') 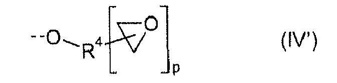 where R⁴ is a moiety of an aliphatic, cycloaliphatic, aromatic or araliphatic epoxide containing a primary or secondary hydroxy group, after removal of the hydroxy and epoxy groups;
p = 1, 2 or 3 and
the value of each of m and m' is a value from 0 to 8, with the proviso that
the value of m+m' is from 1 to 8.

8. Heat-curable epoxy resin composition according to Claim 1 or 2 or 3, **characterized in that** the polymeric impact modifier **D** is a core-shell polymer.

9. Heat-curable epoxy resin composition according to any of the preceding claims, **characterized in that** the hardener **B** is a hardener selected from the group consisting of dicyandiamide, guanamines, guanidines, aminoguanidines and their derivatives; substituted ureas, in particular 3-(3-chloro-4-methylphenyl)-1,1-dimethylurea (chlorotoluron), or phenyldimethylureas, in particular p-chlorophenyl-N,N-dimethylurea (monuron), 3-phenyl-1,1-dimethylurea (fenuron), 3,4-dichlorophenyl-N,N-dimethylurea (diuron), N,N-dimethylurea, N-isobutyl-N',N'-dimethylurea, 1,1'-(hexane-1,6-diyl)bis(3,3'-dimethylurea), and also imidazoles, imidazole salts, imidazolines and amine complexes.

10. Heat-curable epoxy resin composition according to any of the preceding claims, **characterized in that** the value of the ratio by weight of liquid epoxy resin **A1** to solid epoxy resin **A2** is from 0.2 to 5, preferably from 1 to 2.5.

11. Heat-curable epoxy resin composition according to any of the preceding claims, **characterized in that** the glass transition temperature of the at least one homopolymer **HP,** solid at room temperature, is above 100°C.

12. Reinforcement element for the reinforcement of metallic structures having a support, on which a heat-curable epoxy resin composition according to any of Claims 1 to 11 has been applied.

13. Process for the adhesive bonding of heat-resistant substrates, encompassing the steps of
i) application of a heat-curable epoxy resin composition according to any of Claims 1 to 11 to the surface of a heat-resistant substrate **S1,** in particular of a metal;
ii) bringing the applied heat-curable epoxy resin composition into contact with the surface of a further heat-resistant substrate **S2,** in particular of a metal;
iii) heating of the heat-curable epoxy resin composition to a temperature of from 100 to 220°C, in particular from 120 to 200°C, preferably from 160 to 190°C;
where the substrate **S2** and the substrate **S1** are composed of the same or of a different material.

14. Use of a composition according to any of Claims 1 to 11 for the adhesive bonding or reinforcement of metal structures, or reinforcing filling of cavities in manufacturing of vehicles or sandwich-panels.

15. Structural foam, obtained via heating of a heat-curable epoxy resin composition according to any of Claims 2 to 11.

16. Hardened epoxy resin composition, obtained via heating of a heat-curable epoxy resin composition according to any of Claims 1 to 11, to a temperature of from 100 to 220°C, preferably from 120 to 200°C.

## Revendications

1. Composition de résine époxy durcissant à la chaleur, contenant
- au moins une résine liquide époxy **A1** comportant en moyenne plus d'un groupe époxy par molécule ;
- au moins une résine solide époxy **A2** comportant en moyenne plus d'un groupe époxy par molécule ;
- au moins un modificateur antichoc polymère **D** ;
- au moins un homopolymère **HP** d'un monomère à insaturation oléfinique **M,** solide à la température ambiante ;
- au moins un durcisseur **B** pour résines époxy, qui est activé par une température élevée,
étant entendu que la proportion pondérale du modificateur antichoc **D** dans la composition de résine époxy est inférieure à 20 % en poids, et que la quantité pondérale de l'homopolymère **HP** solide à la température ambiante est supérieure à la quantité pondérale du modificateur antichoc **D.**

2. Composition de résine époxy durcissant à la chaleur selon la revendication 1, **caractérisée en ce que** la composition contient en outre au moins un agent d'expansion physique ou chimique, en particulier en une quantité de 0,1 à 3 % en poids, par rapport au poids de la composition.

3. Composition de résine époxy durcissant à la chaleur selon la revendication 1 ou 2, **caractérisée en ce que** l'homopolymère **HP** est un homopolymère d'un monomère **M** qui est choisi dans le groupe constitué par l'acide acrylique, l'acide méthacrylique, des esters d'acide acrylique, des esters d'acide méthacrylique, le styrène, de préférence le (méth)acrylate de méthyle et le styrène.

4. Composition de résine époxy durcissant à la chaleur selon la revendication 1 ou 2 ou 3, **caractérisée en ce que** le modificateur antichoc polymère est un copolymère acrylonitrile/butadiène **D1** fonctionnalisé, en particulier à terminaison carboxy ou époxy.

5. Composition de résine époxy durcissant à la chaleur selon la revendication 1 ou 2 ou 3, **caractérisée en ce que** le modificateur antichoc polymère **D** est un copolymère séquencé **CP** d'ester d'acide (méth)acrylique et d'au moins un autre monomère à insaturation oléfinique.

6. Composition de résine époxy durcissant à la chaleur selon la revendication 1 ou 2 ou 3, **caractérisée en ce que** le modificateur antichoc polymère **D** est un copolymère séquencé amphiphile.

7. Composition de résine époxy durcissant à la chaleur selon la revendication 1 ou 2 ou 3, **caractérisée en ce que** le modificateur antichoc polymère **D** est un polymère polyuréthanne bloqué de formule (IV) 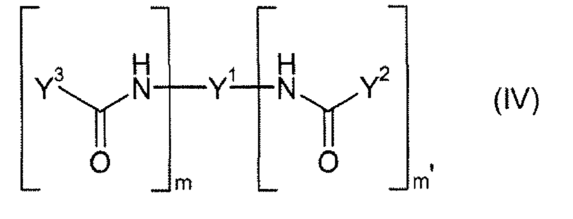 dans laquelle
Y¹ représente un polymère polyuréthanne **PU1** linéaire ou ramifié, terminé par m+m' groupes isocyanate, après l'élimination de tous les groupes isocyanate en bout de chaîne ;
Y² représentent, indépendamment les uns des autres, un groupe de blocage qui se sépare à une température de plus de 100°C ;
Y³ représentent, indépendamment les uns des autres, un groupe de formule (IV') 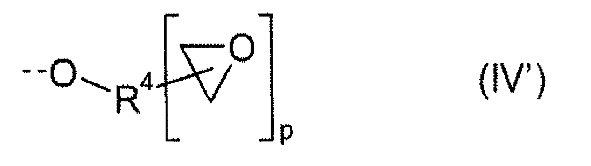 dans laquelle R⁴ représente un reste d'un époxyde aliphatique, cycloaliphatique, aromatique ou araliphatique contenant un groupe hydroxy primaire ou secondaire, après l'élimination des groupes hydroxy et époxy ;
p = 1, 2 ou 3 et
m et m' représentent chacun des valeurs comprises entre 0 et 8, étant entendu que la somme m+m' représente une valeur de 1 à 8.

8. Composition de résine époxy durcissant à la chaleur selon la revendication 1 ou 2 ou 3, **caractérisée en ce que** le modificateur antichoc polymère **D** est un polymère à noyau-enveloppe.

9. Composition de résine époxy durcissant à la chaleur selon l'une quelconque des revendications précédentes, **caractérisée en ce que** le durcisseur **B** est un durcisseur qui est choisi dans le groupe constitué par le dicyanodiamide, les guanamines, guanidines, aminoguanidines et leurs dérivés ; des urées substituées, en particulier la 3-(3-chloro-4-méthylphényl)-1,1-diméthylurée (chlortoluron), ou des phényl-diméthylurées, en particulier la p-chlorophényl-N,N-diméthylurée (monuron), la 3-phényl-1,1-diméthylurée (fénuron), la 3,4-dichlorophényl-N,N-diméthylurée (diuron), la N,N-diméthyurée, la N-isobutyl-N',N'-diméthylurée, la 1,1'-(hexane-1,6-diyl)bis(3,3'-diméthylurée) ainsi que des imidazoles, des sels d'imidazoles, des imidazolines et des complexes d'amines.

10. Composition de résine époxy durcissant à la chaleur selon l'une quelconque des revendications précédentes, **caractérisée en ce que** le rapport pondéral de la résine liquide époxy **A1** à la résine solide époxy **A2** a une valeur de 0,2 à 5, de préférence de 1 à 2,5.

11. Composition de résine époxy durcissant à la chaleur selon l'une quelconque des revendications précédentes, **caractérisée en ce que** ledit au moins un homopolymère **HP** solide à la température ambiante présente une température de transition vitreuse supérieure à 100 °C.

12. Élément de renfort pour le renforcement de structures métalliques, comportant un support sur lequel est appliquée une composition de résine époxy durcissant à la chaleur selon l'une quelconque des revendications 1 à 11.

13. Procédé pour le collage de supports thermostables, comprenant les étapes suivantes
i) application d'une composition de résine époxy durcissant à la chaleur selon l'une quelconque des revendications 1 à 11, sur la surface d'un support thermostable **S1,** en particulier d'un métal ;
ii) mise en contact de la composition appliquée de résine époxy durcissant à la chaleur, avec la surface d'un autre support thermostable **S2,** en particulier d'un métal ;
iii) chauffage de la composition de résine époxy durcissant à la chaleur, à une température de 100-220 °C, en particulier de 120-200 °C, de préférence entre 160 et 190 °C ;
le support **S2** consistant en le même matériau que le support **S1** ou en un matériau différent de celui-ci.

14. Utilisation d'une composition selon l'une quelconque des revendications 1 à 11, pour le collage ou le renforcement de structures métalliques ou le remplissage renforçant de cavités dans la construction de véhicules ou la construction de panneaux sandwich.

15. Mousse structurée, obtenue par chauffage d'une composition de résine époxy durcissant à la chaleur selon l'un quelconque des revendications 2 à 11.

16. Composition de résine époxy durcie, obtenue par chauffage d'une composition de résine époxy durcissant à la chaleur selon l'une quelconque des revendications 1 à 11, à une température de 100-220 °C, de préférence de 120-200 °C.
